(19)

Europäisches Patentamt

European Patent Office

Office européen des brevets

(11) **EP 2 942 505 B1**

(12) **EUROPEAN PATENT SPECIFICATION**

(45) Date of publication and mention of the grant of the patent:
**12.04.2017 Bulletin 2017/15**

(51) Int Cl.:
*F01N 11/00* *(2006.01)*          *F01N 3/10* *(2006.01)*
*F01N 3/36* *(2006.01)*          *F01N 3/025* *(2006.01)*

(21) Application number: **15166947.0**

(22) Date of filing: **08.05.2015**

(54) **AN ABNORMALITY DETERMINATION APPARATUS FOR A PARTICULATE FILTER**

DIAGNOSEVORRICHTUNG FÜR EINEN PARTIKELFILTER

DISPOSITIF DE DIAGNOSTIC POUR UN FILTRE À PARTICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2014 JP 2014096531**

(43) Date of publication of application:
**11.11.2015 Bulletin 2015/46**

(73) Proprietor: **Toyota Jidosha Kabushiki Kaisha Toyota-shi, Aichi-ken 471-8571 (JP)**

(72) Inventors:
- **KATSUDA, Makoto**
  **Aichi, 470-0334 (JP)**
- **HASHIMOTO, Yohsuke**
  **Aichi, 470-0334 (JP)**

(74) Representative: **D Young & Co LLP**
**120 Holborn**
**London EC1N 2DY (GB)**

(56) References cited:
**EP-A- 1 602 807          JP-A- 2010 112 254**
**JP-A- 2011 252 423          US-A1- 2009 084 097**

Printed by Jouve, 75001 PARIS (FR)

## Description

## TECHNICAL FIELD

The present invention relates to an abnormality determination apparatus for a particulate filter which determines whether an abnormality (defect) occurs in the particulate filter provided in an exhaust passage of an internal combustion engine.

## BACKGROUND ART

Conventionally, a "particulate filter" for correcting particulate matters (PM) discharged from an internal combustion engine (especially, a diesel engine) is disposed in an exhaust passage of the engine. When this filter is applied to the diesel engine, the filter is referred to as a "DPF (diesel particulate filter)."

Such a particulate filter is typically a wall-flow type filter. That is, the particulate filter corrects the particulate matters contained in an exhaust gas, when the exhaust gas passes through porous partition walls provided therein. The particulate filter is a filter causing flow resistance. A differential pressure between upstream and downstream of the particulate filter (which is the difference between an inlet-side pressure of the filter and an outlet-side pressure of the filter, and hereinafter, is simply referred to as a "differential pressure") becomes a value having a certain degree of pressure even when the correction amount of the particulate matters is small when the exhaust gas is passing through the particulate filter.

In contrast, the differential pressure becomes small when the particulate filter is broken. Accordingly, a conventional apparatus is configured so as to determine whether an abnormality has occurred in the particulate filter using the differential pressure of the particulate filter (for example, refer to Patent Literature 1).

## [Citation List]

## [Patent Literature]

[Patent Literature 1] Japanese Patent Application Laid-Open (*kokai*) No. 2011-252423 discloses a diagnostic apparatus for a filter.

## SUMMARY OF INVENTION

However, the differential pressure of the particulate filter does not become large in a case in which an intake air quantity is small (that is, a case in which an resultant exhaust gas flow rate is low, and therefore, a flow rate of the gas passing through the particulate filter is low) even when the particulate filter is normal. In other words, in the case in which the exhaust gas flow rate is low, there may be a case in which a difference between the differential pressure when the abnormality has occurred in the particulate filter and the differential pressure when the abnormality has not occurred in the particulate filter does not become large. Therefore, when an abnormality determination of the particulate filter using the differential pressure obtained when the exhaust gas flow rate is low, the determination may not be proper. Accordingly, it is necessary to wait (withhold making the determination) until the exhaust gas flow rate becomes high in order to perform the "abnormality determination of the particulate filter" with high accuracy using the differential pressure.

On the other hand, in recent years, as a result of an improvement of a mileage of an engine, chances that the exhaust gas flow rate becomes large while the engine is in a normal operating state decrease. As a result, as for the conventional apparatus, a frequency to perform the "abnormality determination of the particulate filter" with high accuracy using the differential pressure decreases.

The present invention is made to solve the problem mentioned above. That is, one of the objects of the present invention is to provide an "abnormality determination apparatus for the particulate filter," which can ensure the frequency of the abnormality determination of the particulate filter using the differential pressure of the particulate filter and perform the abnormality determination with high accuracy.

The abnormality determination apparatus of the present invention (hereinafter, referred to as a "present invention apparatus") comprises a catalytic device (catalytic unit, catalytic converter), an unburnt components supply section, a differential pressure acquisition section, and an abnormality determination section.

The catalytic device is disposed in an exhaust passage of the internal combustion engine and at a position upstream of a particulate filter disposed in the exhaust passage (hereinafter, simply referred to as a "filter"). The catalytic device, for example, may be a well-known diesel oxidation catalyst for oxidizing unburnt components (unburnt gas) contained in the exhaust gas.

The unburnt components supply section supplies unburnt components (e.g., fuel) used for raising a temperature of the catalytic device to the catalytic device. The unburnt components supply section may be an apparatus which supplies the fuel to the catalytic device by adding the fuel to a portion upstream of the catalytic device in the exhaust passage (e.g., a fuel adding valve and a device which supplies the fuel to the fuel adding valve). Alternatively, the unburnt components supply section may be an apparatus which performs so-called post injection, the post injection being executed at an injection timing which is delayed from an injection timing of the main injection (for example, an in-cylinder fuel injection valve and a fuel supply device supplying the fuel to the in-cylinder fuel injection valve). The unburnt components supplied from the unburnt components supply section to the catalytic device are oxidized in the catalytic device to generate a heat. As a result, a temperature of the catalytic device and a temperature of a gas (exhaust gas) discharged from the catalytic device increase. Thus, a volume of the gas increases since the gas inflates, so that a gas flow rate (volumetric flow rate) of a gas passing through the filter (or the gas flowing into the filter) increases. It should be noted that, hereinafter, the gas flow rate of the gas passing through the filter may also be referred to as a "passing-through gas flow rate."

The differential pressure acquisition section obtains the differential pressure of the particulate filter. The differential pressure acquisition section may be a well-known differential pressure sensor which detects the differential pressure between the upstream pressure (inlet-side pressure) of the particulate filter and the downstream pressure (outlet-side pressure) of the particulate filter. Alternatively, the differential pressure acquisition section may be an apparatus which obtains the differential pressure of the particulate filter, based on an output of a pressure sensor which detects the upstream pressure and an output of a pressure sensor which detects the downstream pressure.

When a predetermined specific condition is satisfied, the abnormality determination section:

(1) raises the temperature of the catalytic device by supplying the unburnt components to the catalytic device from the unburnt components supply section;
(2) obtains the differential pressure of the particulate filter using the differential pressure acquisition section in a temperature raised state in which the temperature of the catalytic device has been raised; and
(3) determines whether the abnormality occurs in the particulate filter, based on a comparison result between a differential pressure correlation value (determination parameter) and a predetermined threshold value. The differential pressure correlation value is a value which correlates with the obtained differential pressure.

The specific condition is a condition indicating that an operating state becomes a state in which the determination parameter used for performing the abnormality determination of the particulate filter should be obtained.

As described above, when the temperature of the catalytic device is raised, the flow rate of the gas passing through the catalytic device increases. Therefore, the passing-through gas flow rate of the particulate filter disposed downstream of the catalytic device increases. As a result, the differential pressure of the particulate filter increases. In this case, an increasing degree in the differential pressure of the normal particulate filter is larger than an increasing degree in the differential pressure of the abnormal particulate filter. Therefore, the differential pressure obtained when the temperature of the catalytic device is increased assumes/becomes a value which has a significantly large difference between the case when the filter is normal and the case when filter is abnormal. Therefore, the differential pressure correlation value which correlates with the differential pressure also assumes/becomes a value which has a significantly large difference between the case when the filter is normal and the case when filter is abnormal. The present invention apparatus performs the abnormality determination of the filter based on the comparison result between the thus obtained correlation value and the predetermined threshold value. Further, the present invention apparatus forcibly increases the passing-through gas flow rate of the particulate filter by raising the temperature of the catalytic device when the specific condition is satisfied. Accordingly, the present invention apparatus can more frequently perform the "abnormality determination of the filter" with a high accuracy.

It should be noted that the "differential pressure correlation value which correlates with the differential pressure" may be a value varying in response to the differential pressure. For example, the differential pressure correlation value may be the differential pressure itself, an inverse of the differential pressure, or a value obtained on the basis of a "difference between the differential pressure when the temperature of the catalytic device is increased and the differential pressure when the temperature of the catalytic device is not increased" (for example, a differential pressure increase rate described below and its inverse, etc.).

In one of aspects of the abnormality determination apparatus according to the present invention, the abnormality determination section is configured so as to:

(4) obtain, as a first flow rate, the flow rate of the gas passing through the particulate filter (passing-through gas flow rate), and obtain, as a first differential pressure, the differential pressure, in a "non-temperature raised state in which the temperature of the catalytic device is not raised (i.e., a state in which the unburnt components are not supplied)";
(5) obtain, as a second flow rate, the passing-through gas flow rate, and obtain, as a second differential pressure, the differential pressure, in a "temperature raised state in which the temperature of the catalytic device is raised (i.e., a state in which the unburnt components are being supplied)"; and
(6) obtain, as the differential pressure correlation value, a value corresponding to a differential pressure increase rate which is a rate of a "difference between the second differential pressure and the first differential pressure" to a "difference between the second flow rate and the first flow rate." The value corresponding to a differential pressure increase rate may be the differential pressure increase rate itself, an inverse of the differential pressure increase rate, and the like.

Even when "the differential pressure acquisition section has a zero-point errors" and/or "the flow rate acquisition section, which obtains or estimates the exhaust gas flow rate, has a zero-point errors," the differential pressure increase rate becomes a value which cancels out (compensates for) such zero-point errors. Therefore, the aspect of the present invention can perform the abnormality determination of the particulate filter with higher accuracy as compared to the case in which the abnormality determination is performed using only the differential pressure obtained in the temperature raised state.

In one of the aspects of the abnormality determination apparatus according to the present invention,

The abnormality determination section is configured so as to:

(7) adopt, as a provisional determination value, a value which is correlated with the differential pressure of the particulate filter obtained using the differential pressure acquisition section in the non-temperature raised state in which the temperature of the catalytic device is not raised;

(8) determine that the specific condition is satisfied when it is determined that there is a possibility that an abnormality occurs in the particulate filter based on a comparison results between the provisional determination value and a provisional determination threshold value.

The invention apparatus according to this aspect obtains the provisional determination value when the catalytic device is in the non-temperature raised state. The provisional determination value is a parameter used in determining whether there is a possibility that the abnormality occurs in the particulate filter. Thus, the provisional determination value may have slightly lower accuracy than a parameter used in performing a final abnormality determination. Therefore, the provisional determination value can be obtained at a relatively early timing during a normal operation of the engine, since the provisional determination value can be obtained when the passing-through gas flow rate of the filter is relatively small. Thus, the determination (provisional determination) whether there is a possibility that an abnormality occurs in the particulate filter can also be performed with relatively high frequency. Accordingly, the final determination as to whether the abnormality occurs in the particulate filter can be frequently performed.

Furthermore, the invention apparatus of this aspect does not raise the temperature of the catalytic device (it does not supply the unburnt components to the catalytic device) until it determines that there is a possibility that the abnormality occurs in the particulate filter, and thus, a wasteful consumption of the unburnt components can be avoided.

Other objects, features and advantages of the present invention accompanying it will be readily understood from the description of the embodiments of the present invention with reference to the following drawings.

## BRIEF DESCRIPTION OF DRAWINGS

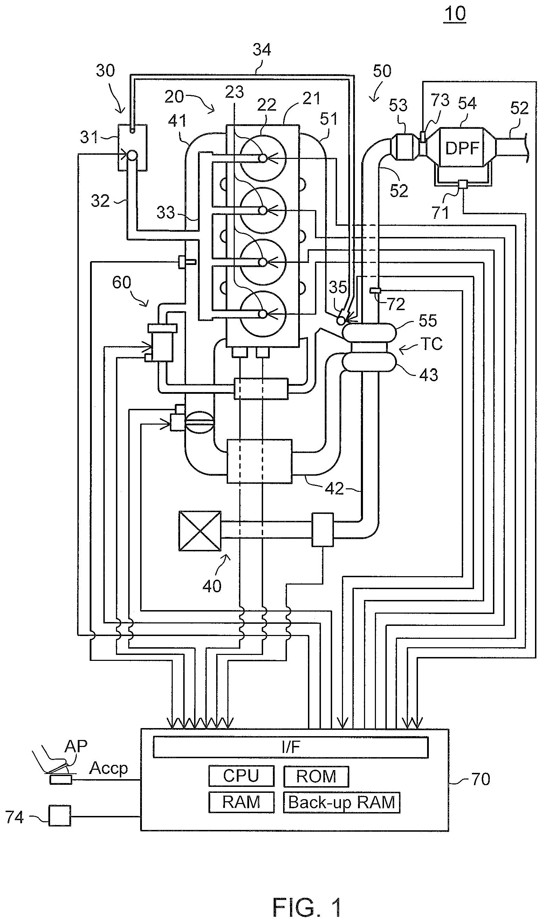

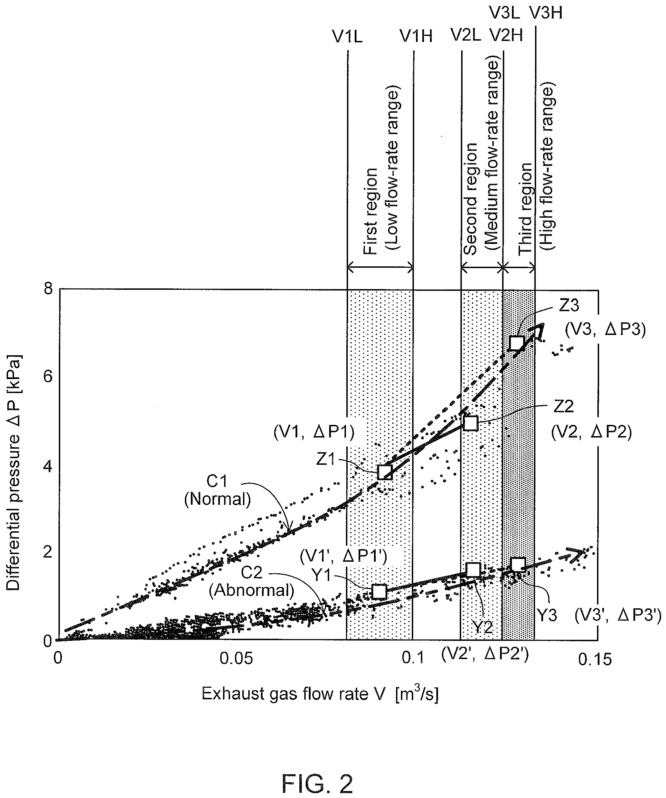

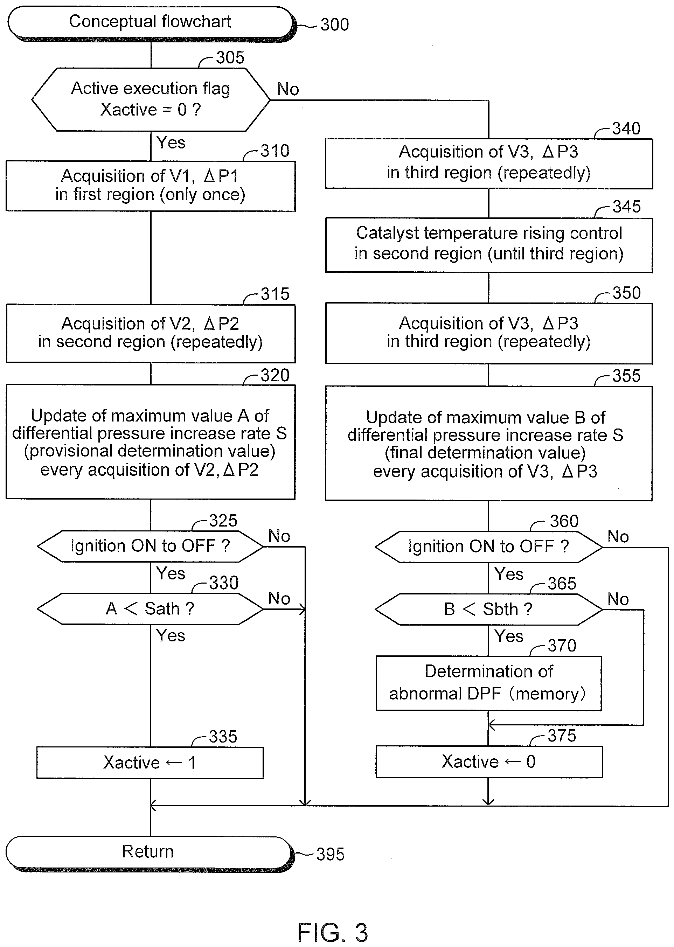

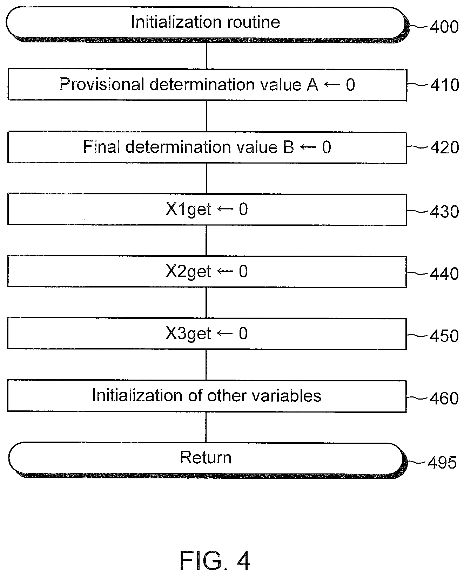

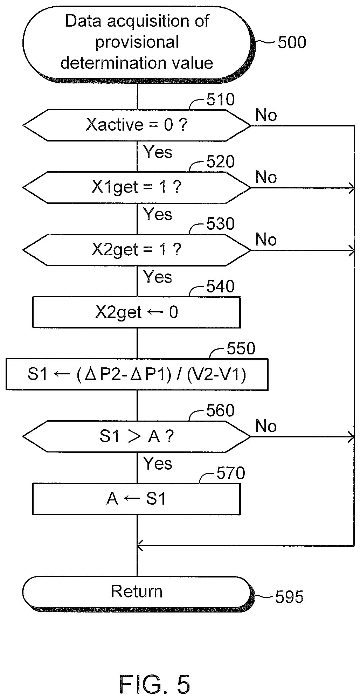

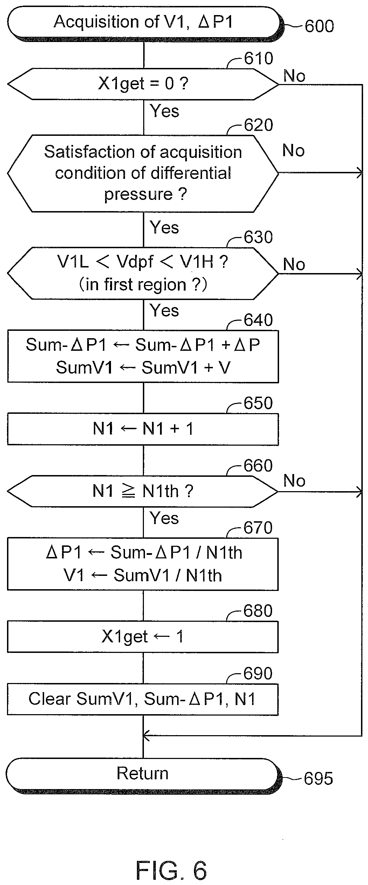

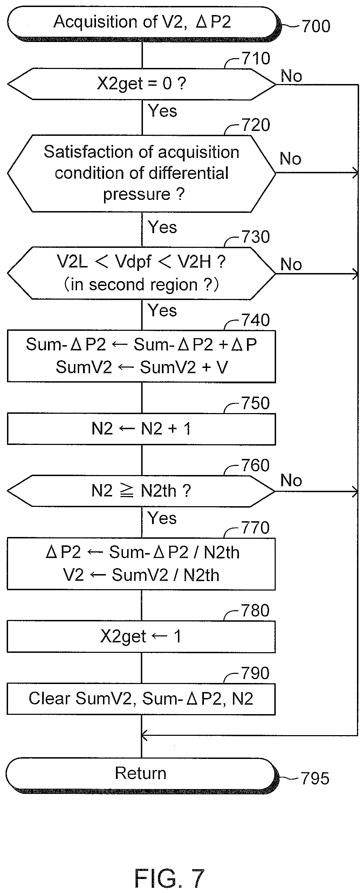

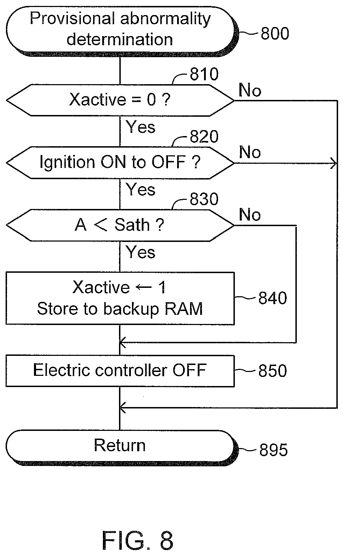

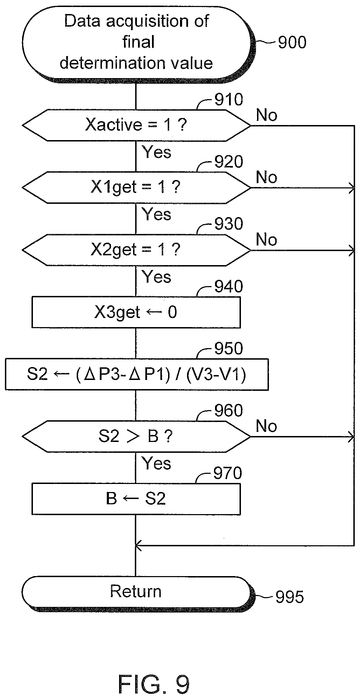

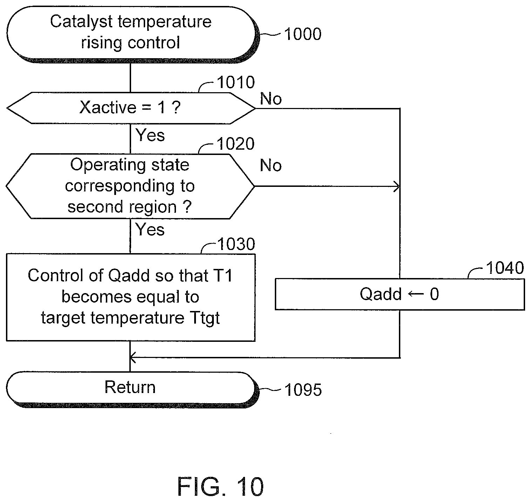

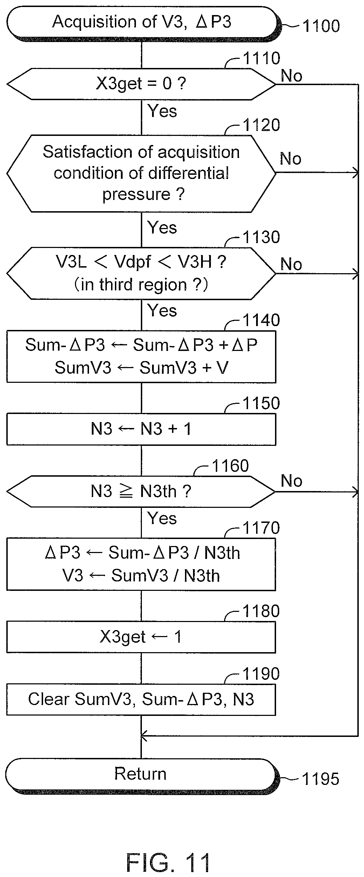

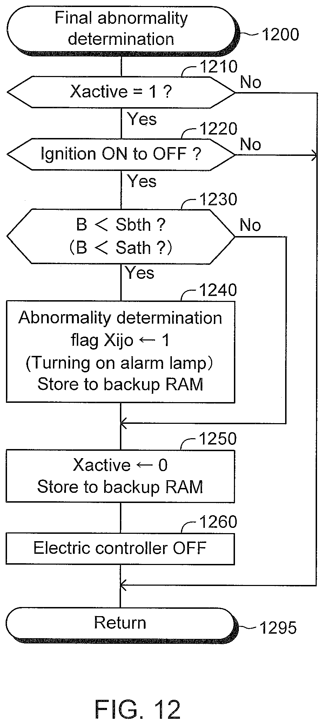

FIG. 1 is a schematic diagram of an internal combustion engine to which "an abnormality determination apparatus of a particulate filter" according to a first embodiment of the present invention is applied. FIG. 2 is a graph showing a relationship between an exhaust gas flow rate (a passing-through gas flow rate of the particulate filter (DPF)) and a differential pressure of the DPF shown in FIG. 1. FIG. 3 is a general flowchart showing an outline of an operation of the abnormality determination apparatus according to the first embodiment. FIG. 4 is a flowchart showing "an initialization routine" executed by a CPU of the first embodiment. FIG. 5 is a flowchart showing "a provisional determination value acquisition routine" executed by the CPU of the first embodiment. FIG. 6 is a flowchart showing "an original data acquisition routine for a provisional determination value in a first region" executed by the CPU of the first embodiment. FIG. 7 is a flowchart showing "an original data acquisition routine for the provisional determination value in a second region" executed by the CPU of the first embodiment. FIG. 8 is a flowchart showing "a provisional abnormality determination routine" executed by the CPU of the first embodiment. FIG. 9 is a flowchart showing "a final determination value acquisition routine" executed by the CPU of the first embodiment. FIG. 10 is a flowchart showing "a catalyst temperature rising control routine" executed by the CPU of the first embodiment. FIG. 11 is a flowchart showing "an original data acquisition routine for the final determination value in a third region" executed by the CPU of the first embodiment. FIG. 12 is a flowchart showing "a final abnormality determination routine" executed by the CPU of the first embodiment.

## DESCRIPTION OF EMBODIMENTS

<First embodiment>

Hereinafter, a first embodiment of an abnormality determination apparatus for a particulate filter (hereinafter, simply referred to as a "first determination apparatus") will be described with reference to the drawings.

(Configuration)

The first determination apparatus is applied to an internal combustion engine (an engine) 10 shown in FIG.1. The engine 10 is a multi-cylinder (an in-line four cylinder in this embodiment) four cycle reciprocating diesel engine. The engine 10 comprises a main engine unit 20, a fuel supply system 30, an intake system 40, an exhaust system 50, and an EGR system 60.

The main engine unit 20 comprises an engine main body 21, including a cylinder block section, a cylinder head section, and a crankcase section or the like. Four combustion cylinders (chambers) 22 are formed in the main body 21. Each of fuel injectors 23 is disposed at the top of each of the cylinders 22. Each of the fuel injectors 23 is opened in response to an instruction signal from the electronic controller 70 described below to thereby directly inject a fuel into each of the cylinders.

The fuel supply system 30 comprises a fuel pressure pump (a fuel supply pump) 31, a fuel delivery pipe 32, a common rail (a pressure accumulating chamber) 33, an adding fuel delivery pipe 34, and an adding fuel valve 35. A discharge port of the pump 31 is connected to the fuel delivery pipe 32 and the adding fuel delivery pipe 34. The fuel delivery pipe 32 is connected to the common rail 33. The common rail 33 is connected to each of the injectors 23. The adding fuel delivery pipe 34 is connected to the adding fuel valve 35.

The fuel pressure pump 31 pumps up the fuel from an unillustrated fuel tank, and thereafter, pressurize the fuel. The fuel pressure pump 31 supplies the high-pressure fuel pressurized by the fuel pressure pump 31 to the common rail 33 via the fuel delivery pipe 32. Furthermore, the fuel pressure pump 31 supplies the fuel to the adding fuel valve 35 via the adding fuel delivery pipe 34.

The adding fuel valve 35 opens in response to an instruction signal from an electronic controller 70 described below to thereby add "the fuel as unburnt components" to the exhaust system 50 (in actually, to an exhaust manifold 51 described below).

The intake system 40 comprises an intake manifold 41, an intake pipe 42, and a compressor 43 of a supercharger TC.

The exhaust system 50 comprises an exhaust manifold 51, an exhaust pipe 52, a diesel oxidation catalyst 53, a diesel particulate filter 54, and a turbine 55 of the supercharger TC. Hereinafter, the diesel oxidation catalyst 53 is referred to as "the DOC 53." The diesel particulate filter 54 is referred to as "the DPF 54." The DPF is an abbreviation of a diesel particulate filter.

The exhaust manifold 51 comprises a plurality of branch portions, each of which is connected to each of the cylinders, and a merged portion into which a plurality of the branch portions merge. The exhaust pipe 52 is connected to the merged portion of the exhaust manifold 51. The exhaust manifold 51 and the exhaust pipe 52 constitute an exhaust passage. The adding fuel valve 35, the turbine 55, the DOC 53, and the DPF 54 are successively disposed at predetermined positions in the exhaust pipe 52 in this order, from the upstream to the downstream of an exhaust gas stream.

The DOC 53 oxidizes unburnt components (such as hydrocarbon HC, carbon monoxide CO, and nitrogen monoxide NO) in the exhaust gas using (a) noble metal(s) such as platinum, palladium, or the like serving as a catalyst, to purify the exhaust gas. That is, hydrocarbon is oxidized to be changed into water ($H_2O$) and carbon dioxide ($CO_2$), carbon monoxide is oxidized to be changed into carbon dioxide ($CO_2$), and nitrogen monoxide is oxidized to be changed into nitrogen dioxide ($NO_2$).

Furthermore, the DOC 53 oxidizes the fuel (unburnt components) supplied from the adding fuel valve 35. The oxidation of the fuel generates an oxidation heat, and thus, the temperature of the DOC 53 increases. Accordingly, the temperature of the exhaust gas flowing out from the DOC 53 increases, and therefore, the exhaust gas flow rate (volumetric flow rate) increases. That is, when the fuel is supplied from the adding fuel valve 35, the gas flow rate (volumetric flow rate) Vdpf of the gas passing through the DPF 54 (gas flowing into the DPF 54) increases, even if the exhaust gas flow rate (volumetric flow rate) of a gas which is discharged from the turbine 55 of the supercharger TC is constant. Hereinafter, the volumetric flow rate of the gas passing through the DPF 54 is also simply referred to as a "DPF-passing-through-gas flow rate Vdpf."

The DPF 54 collects/captures a PM (Particulate Matter) which includes carbon soot and organic matter adhering thereto. The DPF 54 is a well-known wall-flow type ceramic filter. More specifically, the DPF 54 is provided with a plurality of gas passages formed of heat-resistant ceramics such as "cordierite, and silicon carbide," and being molded to have a honeycomb structure. One end of each of the gas passages next to each other is closed alternately. The exhaust gas flowing into the DPF 54 can not directly pass through the filter due to the closed ends, and therefore, passes through the porous barrier wall (diaphragm) between the adjacent gas passages. The PM, the ash, or the like, included in the exhaust gas are collected/captured in the DPF 54, when the exhaust gas passes through the wall.

Further, an unillustrated SCR catalyst may be provided at a position downstream of the DPF 54. The SCR catalyst is a "NOx selective reduction catalyst" which cleans/purifies the exhaust gas by reducing NOx using ammonia ($NH_3$). In this case, an apparatus is provided, which supplies urea to generate ammonia to be supplied to the SCR catalyst by hydrolysis.

An electronic controller 70 is an electronic circuit including a well-known microcomputer comprising a CPU, a ROM, a RAM, a backup RAM (a static RAM, or a non-volatile memory), an interface, or the like. The electronic controller 70 is connected to sensors (described below), and receives (inputs) signals from the sensors. Furthermore, the electronic controller 70 sends instruction signals or drive signals to various actuators in response to the instructions from the CPU. It should be noted that the backup RAM is not particularly limited as long as it is configured to be able to keep the information even when no power is supplied to the electronic controller 70.

The electronic control device 70 is connected to a differential pressure sensor 71, an exhaust gas flow rate sensor 72, an exhaust gas temperature sensor 73, an ignition key switch 74, or the like.

The differential pressure sensor 71 is a well-known pressure sensor, which detects a differential pressure between an upstream pressure (DPF inlet pressure, a pressure between the DOC 53 and the DPF 54, that is an upstream side pressure) and a downstream pressure (DPF outlet pressure, that is a downstream side pressure) to output a differential pressure $\Delta P$.

The exhaust gas flow rate sensor 72 is disposed at a position in the exhaust pipe 52 and between the turbine 55 and the DOC 53. The exhaust gas flow rate sensor 72 detects a flow rate (volumetric flow rate) of the exhaust gas flowing in the exhaust pipe 52, so as to output a signal indicative of the exhaust gas flow rate V. Further, the exhaust gas flow rate sensor 72 includes a temperature sensor therein to detect a temperature of the exhaust gas so as to output a signal indicative of the exhaust gas temperature T0.

The exhaust gas temperature sensor 73 is disposed at a position in the exhaust pipe 52 and between the DOC 53 and the DPF 54. The exhaust gas temperature sensor 73 detects a temperature of the exhaust gas passing through the DOC 53, and thereafter, flowing into the DPF 54 so as to output a signal indicative of the exhaust gas temperature T1. The ignition key switch 74 is a switch which includes an ON position for starting the engine 10 and OFF position for stopping the engine 10.

(Outline of operation)

Next will be described an outline of the operation of the first determination apparatus with reference to FIG. 2. FIG. 2 is a graph which shows a relationship between the exhaust gas flow rate V (Final determination threshold value Sbth) and the differential pressure of the DPF 54 $\Delta P$, with respect to a normal DPF54 and an abnormal DPF54. A curved line C1 is for the normal DPF. A curved line C2 is for the abnormal DPF.

As understood from the line C1 and the line C2 in FIG. 2, the differential pressure $\Delta P$ increases in a quadratic function manner with respect to the exhaust gas flow rate V. That is, it can be said that the differential pressure $\Delta P$ and the exhaust gas flow rate V has a relationship expressed by $\Delta P = a \cdot V^2$ in the case of normal DPF. It can be said that the differential pressure $\Delta P$ and the exhaust gas flow rate V has a relationship expressed by $\Delta P' = b \cdot V'^2$ in the case of abnormal DPF. Note that "a" (positive constant) is larger than "b" (positive constant). It can also be said that the differential pressure $\Delta P'$ with respect to the abnormal DPF is substantially proportional to the exhaust gas flow rate V' since the value of "b" is small. Therefore, the differential pressure $\Delta P'$ and the

gas flow rate V' has a relationship expressed by $\Delta P' = k \cdot V'$. Accordingly, a difference ($\Delta P - \Delta P'$) between the differential pressure $\Delta P$ of the normal DPF and the differential pressure $\Delta P'$ of the abnormal DPF increases, as the exhaust gas flow rate V increases.

In the example shown in FIG. 2, with respect to the normal DPF, when the exhaust gas flow rate V is in a first region (low flow-rate range) where the exhaust gas flow rate V is relatively low, a data shown by the point Z1 is obtained. The data (Exhaust gas flow rate V, the differential pressure $\Delta P$) on the point Z1 is (V1, $\Delta P1$). Further, when the exhaust gas flow rate V is in a second region (medium flow-rate range) where the exhaust gas flow rate V is medium, a data shown by the point Z2 is obtained. The data (Exhaust gas flow rate V, the differential pressure $\Delta P$) on the point Z2 is (V2, $\Delta P2$). Therefore, a ratio S1 (hereinafter, referred to as "a differential pressure increase rate" or "a differential pressure inclination") of an increase amount of the differential pressure $\Delta P$ to an increase amount of the exhaust gas flow rate V ("DPF-passing-through-gas flow rate Vdpf') is expressed by a formula below. It should be noted that "the differential pressure increase rate" is also referred to as a "correlation value of the pre-post differential pressure" or a "differential pressure correlation value," since the differential pressure increase rate is a value which is correlated with the differential pressure $\Delta P$.

$$S1 = (\Delta P2 - \Delta P1) / (V2 - V1)$$

As understood from FIG. 2, when an abnormality (breakage) of the DPF 54 occurs, the increase rate of the differential pressure S becomes smaller, as compared with a case in which the DPF 54 is normal. Therefore, an abnormality determination apparatus may be devised, which determines that the DPF 54 is abnormal when the differential pressure increase rate S is smaller than a predetermined threshold value Sath, and determines that the DPF 54 is normal when the differential pressure increase rate S is equal to or larger than the predetermined threshold value Sath.

In contrast, with respect to the abnormal DPF, when the exhaust gas flow rate V is in the first region (low flow-rate range) where the exhaust gas flow rate V is relatively low, a data shown by the point Y1 is obtained. The data (Exhaust gas flow rate V, the differential pressure $\Delta P$) on the point Y1 is (V1', $\Delta P1'$). Further, when the exhaust gas flow rate V is in the second region (medium flow-rate range) where the exhaust gas flow rate V is medium, a data shown by the point Y2 is obtained. The data (Exhaust gas flow rate V, the differential pressure $\Delta P$) on the point Y2 is (V2', $\Delta P2'$). Therefore, a differential pressure increase rate S1' for this case is expressed by a formula below.

$$S1' = (\Delta P2' - \Delta P1') / (V2' - V1')$$

In this case, as understood from FIG. 2, a difference between the differential pressure increase rate S1 and the differential pressure increase rate S1' is relatively small. Therefore, the differential pressure increase rate S1 obtained with respect to the normal DPF and the differential pressure increase rate S1' obtained with respect to the abnormal DPF may substantially coincide with each other due to various errors. Accordingly, the determination that the DPF 54 is abnormal may be wrong, if the determination is made using a mere fact that the "differential pressure increase rate, which is obtained from data when the exhaust gas flow rate V is in the first region and data when the exhaust gas flow rate V is in the second region" is smaller than the threshold value.

In contrast, when the exhaust gas flow rate V is in a third region (high flow-rate range) where the exhaust gas flow rate V is relatively high, a data shown by the point Z3 is obtained for the normal DPF 54. The data (Exhaust gas flow rate V, the differential pressure $\Delta P$) on the point Z3 is (V3, $\Delta P3$). Further, when the exhaust gas flow rate V is in the third region (high flow-rate range) where the exhaust gas flow rate V is high, a data shown by the point Y3 is obtained for the abnormal DPF 54. The data (Exhaust gas flow rate V, the differential pressure $\Delta P$) on the point Y3 is (V3', $\Delta P3'$).

Therefore, a differential pressure increase rate S2 calculated using the data on the point Z3 and the data on the point Z1 is expressed by a formula below.

$$S2 = (\Delta P3 - \Delta P1) / (V3 - V1)$$

Similarly, a differential pressure increase rate S2' calculated using the data on the point Y3 and the data on the point Y1 is expressed by a formula below.

$$S2' = (\Delta P3' - \Delta P1') / (V3' - V1')$$

As understood from FIG. 2, the differential pressure increase rate S2 increases considerably as compared with the differential pressure increase rate S1, however, the differential pressure increase rate S2' is roughly equal to the differential pressure increase rate S1'. Accordingly, the differential pressure increase rate S2 increases considerably compared with the differential pressure increase rate S2'. Thus, when the threshold value Sbth is set to/at an appropriate value, the differential pressure increase rate S2 obtained with respect to the normal DPF is considerably/apparently greater than the threshold value Sbth, and the differential pressure increase rate S2 obtained with respect to the abnormal DPF is considerably/apparently smaller than the threshold value Sbth.

Therefore, it is possible to determine accurately/properly whether the DPF 54 is abnormal by comparing the "threshold value Sbth" with the "differential pressure increase rate which is obtained from a data when the exhaust gas flow rate V is in the first region and a data when the exhaust gas flow rate V is in the third region."

However, the engine 10 in recent years can generate a large torque and power, even when the exhaust gas flow rate is low, because a mileage of the engine 10 has been greatly improved. Therefore, when the engine 10 is operated normally, the frequency that the exhaust gas flow rate V increases up to a value in the third region (high flow-rate range) is low. Therefore, it may take a long time for the exhaust gas flow rate V to become a value in the third region, when attempting to perform the abnormal determination using data obtained when the exhaust gas flow rate V is in the third region. In view of the above, the first determination apparatus performs an abnormality determination of/for the DPF 54 as follows.

(1) The first determination apparatus obtains: the data (DPF-passing-through-gas flow rate Vdpf, the differential pressure $\Delta P$) when the DPF-passing-through-gas flow rate Vdpf (the exhaust gas flow rate V in this case) is in the low flow-rate range; and the data (DPF-passing-through-gas flow rate Vdpf, the differential pressure $\Delta P$) when the DPF-passing-through-gas flow rate Vdpf (the exhaust gas flow rate V in this case) is in the medium flow-rate range. The first determination apparatus calculates, based on those data, the differential pressure increase rate S as a provisional determination value A. The DPF-passing-through-gas flow rate Vdpf is equal to the exhaust gas flow rate V in those cases.

(2) The first determination apparatus compares the provisional determination value A with the provisional determination threshold value Sath.

(3) The first determination apparatus determines that there is a possibility that the DPF 54 is abnormal, when the provisional determination value A is smaller than the provisional determination threshold value Sath. In other words, the first determination apparatus determines one condition is satisfied, the condition constituting a condition (i.e., specific condition) which indicates that a determination parameter used in performing the "abnormality determination for the DPF 54" should be obtained.

(4) The first determination apparatus determines that other one condition constituting the specific condition is satisfied, when the DPF-passing-through-gas flow rate Vdpf (the exhaust gas flow rate V in this case) is in the medium flow-rate range in a case in which it has determined that the DPF 54 may be abnormal. In this case, the first determination apparatus supplies unburnt components to the DOC 53 by adding fuel (i.e., unburnt components) into the exhaust passage from the adding fuel valve 35.

As a result, the unburnt components are oxidized in the DOC 53 to generate a heat, which increases a temperature of the DOC 53 and a temperature of the gas (the exhaust gas) passing through the DOC 53. Accordingly, the exhaust gas expands, and thus, the volumetric flow rate of the gas flowing into the DPF 54 (DPF-passing-through-gas flow rate) increases. As a result, the DPF-passing-through-gas flow rate Vdpf becomes a value within a high flow-rate range shown in FIG.2. Hereinafter, increasing the temperature of the DOC 53 by adding the unburnt components to the DOC 53 in order to increase the DPF-passing-through-gas flow rate Vdpf is referred to as a "catalyst temperature rising control." A state in which the temperature of the DOC 53 is made high by the catalyst temperature rising control is referred to as a "temperature raised state." Further, the state in which the catalyst temperature rising control is not being carried out is referred to as a "non-temperature raised state."

(5) The first determination apparatus obtains the data (the DPF-passing-through-gas flow rate Vdpf, the differential pressure $\Delta P$) in the temperature raised state (that is, when the DPF-passing-through-gas flow rate Vdpf is in the high flow-rate range).

(6) The first determination apparatus obtains/calculates the differential pressure increase rate S as the final determination value B (i.e., differential pressure correlation value) from the data (the DPF-passing-through-gas flow rate Vdpf, the differential pressure $\Delta P$) when the DPF-passing-through-gas flow rate Vdpf is in the low flow-rate range and the data (the DPF-passing-through-gas flow rate Vdpf, the differential pressure $\Delta P$) when the DPF-passing-through-gas flow rate Vdpf is in the high flow-rate range. It should be noted that the first determination apparatus may obtain/calculate the differential pressure increase rate S as the final determination value B from the data (the DPF-passing-through-gas flow rate Vdpf, the differential pressure $\Delta P$) when the DPF-passing-through-gas flow rate Vdpf is in the medium flow-rate range, and the data (the DPF-passing-through-gas flow rate Vdpf, the differential pressure $\Delta P$) when the DPF-passing-through-gas flow rate Vdpf is in the high flow-rate range.

(7) The first determination apparatus compares the final determination value B which is the "differential pressure correlation value" with a final determination threshold value Sbth which is a "predetermined value."

(8) The first determination apparatus determines that the DPF 54 is abnormal when the final determination value B is smaller than the final determination threshold value Sbth. The first determination apparatus determines that the DPF 54 is normal when the final determination value B is equal to or larger than the final determination threshold value Sbth.

It should be noted that the differential pressure increase rate S becomes a value which can cancel out (compensate) a zero-point errors, even when the output values of the differential pressure sensor 71 and/or the exhaust gas flow rate sensor 72 include the zero-point errors. Therefore, the abnormality determination of the DPF 54 using the differential pressure increase rate S may result in a more accurate determination result than the abnormality determination using the differential pressure itself.

Further, the first determination apparatus obtains the differential pressure increase rate S, using, as a reference, the data (DPF-passing-through-gas flow rate Vdpf, the differential pressure $\Delta P$) within the low flow-rate range (the first region) where the DPF-passing-through-gas flow rate Vdpf is not "0" (i.e., it does not correspond to an origin). The reason for this is as follows. As described above, since the differential pressure $\Delta P$ increases in a quadratic function manner with respect to the DPF-passing-through-gas flow rate Vdpf, it is possible to obtain a larger differential pressure increase rate S by obtaining the differential pressure increase rate S using, as a reference, the data (DPF-passing-through-gas flow rate Vdpf, the differential pressure $\Delta P$) when the DPF-passing-through-gas flow rate Vdpf is not "0." Thus, it is possible to more accurately carry out the abnormality determination of the DPF 54.

In addition, as described above, the DPF-passing-through-gas flow rate Vdpf is substantially equal to the exhaust gas flow rate V detected by the exhaust gas flow rate sensor 72, when the catalyst temperature rising control is not being performed. On the other hand, the DPF-passing-through-gas flow rate Vdpf is different from the exhaust gas flow rate V detected by the exhaust gas flow rate sensor 72, when the catalyst temperature rising control is being performed. Therefore, the electronic controller 70 estimates the DPF-passing-through-gas flow rate Vdpf based on the exhaust gas flow rate V and the exhaust gas temperature T0, both detected by the exhaust gas flow rate sensor 72, and the exhaust gas temperature T1 detected by the exhaust gas temperature sensor 73.

<Concept of Processing>

Next will be specifically described a concrete operation of the first determination apparatus with reference to FIG. 3. FIG. 3 is a conceptual flowchart of the processing performed by the CPU of the electronic controller 70.

First, the CPU determines whether a value of an active execution flag Xactive is "0" at step 305. The value of the active execution flag Xactive is typically set to "0." Thus, the CPU typically makes a "Yes" determination at step 305 to proceed to step 310, at which the CPU obtains "DPF-passing-through-gas flow rate Vdpf, and the differential pressure $\Delta P$" only once as "V1 ,and $\Delta P1$," respectively, in a period in which the DPF-passing-through-gas flow rate Vdpf is in the first region (low flow-rate range). The DPF-passing-through-gas flow rate Vdpf is equal to the exhaust gas flow rate V in this case.

Subsequently, the CPU proceeds to step 315, at which the CPU obtains "the DPF-passing-through-gas flow rate Vdpf, and the differential pressure ΔP" repeatedly, as "V2, and ΔP2" respectively, when the operating state of the engine 10 is a "state where the DPF-passing-through-gas flow rate Vdpf is in the second region (medium flow-rate range)." The DPF-passing-through-gas flow rate Vdpf is equal to the exhaust gas flow rate V in this case. Further, the CPU proceeds to step 320 every time the CPU newly obtains "V2, and ΔP2" to calculate the differential pressure increase rate S = (ΔP2 - ΔP1) / (V2 - V1). Thereafter, if the newly calculated differential pressure increase rate S is larger than a maximum value (hereinafter, referred to as a "provisional determination value A") of the differential pressure increase rates S, obtained until the current point in time, the CPU adopts the newly calculated differential pressure increase rate S as the "provisional determination value A." That is, the CPU obtains, as the provisional determination value A, the maximum value of the differential pressure increase rates S, each calculated every time the "V2, and ΔP2" are obtained.

At a point in time at which a plurality of the data "V2, ΔP2" are acquired (i.e., a point in time at which a plurality of the differential pressure increase rates S are calculated), the CPU proceeds to step 325 to determine whether the ignition key switch 74 of a vehicle (not shown) equipped with the engine 10 has been changed from an ON position to an OFF position (i.e., whether the operation of the engine 10 has been stopped).

When the ignition key switch 74 has been changed from the ON position to the OFF position, the CPU makes a "Yes" determination at step 325 to proceed to step 330, at which the CPU determines whether the provisional determination value A is smaller than the provisional determination threshold value Sath. That is, when the value of the active execution flag Xactive is "0," the CPU executes the provisional abnormality determination based on a comparison between the provisional determination value A and the provisional determination threshold value Sath, every time the operation of the engine 10 is stopped.

When the provisional determination value A is equal to or larger than the provisional determination threshold value Sath, there is no possibility that the DPF 54 is abnormal (or, its possibility is very low). Therefore, the CPU makes a "No" determination at step 330 to directly proceed to step 395 so as to end the present routine tentatively. Accordingly, the active execution flag Xactive is maintained at "0."

In contrast, when the provisional determination value A is smaller than the provisional determination threshold value Sath, there is a possibility that the DPF 54 is abnormal. Thus, the CPU makes a "Yes" determination at step 330 to proceed to step 335, at which the CPU sets the value of the active execution flag Xactive to "1." Subsequently, the CPU proceeds to step 395.

In this way, in the case in which the value of the active execution flag Xactive is set to "1," and when the CPU proceeds to step 305 after the operation of the engine 10 is restarted, the CPU makes a "No" determination at step 305 to proceed to step 340. Similarly to step 310, at step 340, the CPU obtains " the DPF-passing-through-gas flow rate Vdpf, and the differential pressure ΔP," only once, as "V1, and ΔP1," respectively, in the period in which the DPF-passing-through-gas flow rate Vdpf is in the first region (low flow-rate range). The DPF-passing-through-gas flow rate Vdpf is equal to the exhaust gas flow rate V in this case.

Next, the CPU proceeds to step 345 to execute/perform the "catalyst temperature rising control" which accelerates/promotes an oxidation reaction in the DOC 53 by supplying the fuel from the adding fuel valve 35 into the exhaust pipe 52, when the operation state of the engine 10 becomes a "specific operating state in which the DPF-passing-through-gas flow rate Vdpf is within the second region (medium flow-rate range)." Thereby, the DPF-passing-through-gas flow rate Vdpf is increased to become a value within the third region (high flow-rate range).

Subsequently, the CPU proceeds to step 350 to repeatedly obtain "the DPF-passing-through-gas flow rate Vdpf, and the differential pressure ΔP," as "V3, and ΔP3," respectively, in a period in which the DPF-passing-through-gas flow rate Vdpf is within the third region (high flow-rate range). Further, the CPU proceeds to step 355 every time it newly obtains "V3, and ΔP3" to calculate the differential pressure increase rate S = (ΔP3 - ΔP1) / (V3 - V1). Thereafter, when the newly calculated differential pressure increase rate S is larger than a maximum value (hereinafter referred to as "the final determination value B") of the differential pressure increase rates S acquired until a present point in time, the CPU adopts the newly calculated differential pressure increase rate S as the "final determination value B." That is, the CPU obtains, as the final determination value B (i.e., "differential pressure correlation value" which is correlated with the differential pressure of the DPF 54), the maximum value of the differential pressure increase rates S, each calculated every time "V3, and ΔP3" are obtained.

At a point in time at which a plurality of the data "V3, ΔP3" are obtained (i.e., when a plurality of the differential pressure increase rates S are calculated), the CPU proceeds to step 360 to determine whether the ignition key switch 74 has been changed from the ON position to the OFF position, similarly to step 325.

When the ignition key switch 74 has changed from the ON position to the OFF position, the CPU makes a "YES" determination at step 360 to proceed to step 365, at which the CPU determines whether the final determination value B is smaller than the final determination threshold value Sbth. That is, when the value of the active execution flag Xactive is "1," the CPU executes/performs the final abnormality determination based on a comparison between the final determination value B and the final determination threshold value Sbth every time the operation of the engine 10 is stopped.

It is determined that the DPF 54 is abnormal when the final determination value B is smaller than the final determination threshold value Sbth, and thus, the CPU makes a "Yes" determination at step 365 to proceed to step 370, at which the CPU determines that the DPF 54 is abnormal, and stores the determination result in the backup RAM. Note that, at this point in time, the CPU may turn on a warning lamp provided in the vehicle interior. Thereafter, the CPU proceeds to step 375 to set the value of the active execution flag Xactive to "0," and proceeds to step 395 to end this routine tentatively.

In contrast, at the point in time at which the CPU executes the processing of step 365, if the final determination value B is equal to or larger than the final determination threshold value Sbth, it is determined that the DPF 54 is normal (not abnormal). Accordingly, the CPU makes a "No" determination at step 365 to directly proceed to step 375. At this point in time, the CPU may store the data indicating that the DPF 54 is normal in the backup RAM. The above is the outline of the flow of the actual operation.

(Specific Processing)

Next will be described an actual processing of the CPU more specifically.

<Initialization of variable>

When the ignition key switch 74 has changed from the ON position to the OFF position (i.e., the engine 10 has been started), the CPU starts a processing of an initial routine shown by a flowchart in FIG. 4 from step 400 to sequentially execute processes from 410 to step 460 described below.

Step 410: The CPU sets the provisional determination value A to "0."

Step 420: The CPU sets the final determination value B to "0."

Step 430: The CPU sets a value of a first flag X1get to "0." When the value of the first flag X1get is "1," it indicates that the "data for calculating the provisional determination value and the final determination value" has been obtained, in the case in which the DPF-passing-through-gas flow rate Vdpf (the exhaust gas flow rate V in this case) is within the first region (low flow-rate range) where the rate V is relatively small.

Step 440: The CPU sets a value of a second flag X2get to "0." When the value of the second flag X2get is "1," it indicates that the "data for calculating the provisional determination value" has been obtained, in the case in which the DPF-passing-through-gas flow rate Vdpf (the exhaust gas flow rate V in this case) is within the second region (medium flow-rate range) where the rate V is medium.

Step 450: The CPU sets a value of a third flag X3get to "0." When the value of the third flag X3get is "1," it indicates that the "data for calculating the final determination value" has been obtained, in the case in which the DPF-passing-through-gas flow rate Vdpf (the exhaust gas flow rate V in this case) is in the third region (high flow-rate range) where the rate V is relatively high.

Step 460: The CPU initializes the other variables.

<Acquisition of provisional determination value>

The CPU is configured so as to repeatedly execute a routine shown by a flowchart in FIG. 5 every elapse of a predetermined time. As described above, the value of the active execution flag Xactive is normally "0." Accordingly, the description is firstly provided on the assumption that the value of the active execution flag Xactive is "0."

At an appropriate point in time after the ignition key switch 74 has changed from the ON position to the OFF position, the CPU starts processes from step 500 in FIG. 5 to proceed to step 510 at which the CPU determines whether the value of the active execution flag Xactive is "0." According to the above assumption, the value of the active execution flag Xactive is "0." Accordingly, the CPU makes a "Yes" determination at step 510 to proceed to step 520 to determine whether the value of the first flag X1get is "1." The value of the first flag X1 get has been set to "0" in the initial routine described above. Accordingly, the CPU makes a "No" determination at step 520 to directly proceed to step 595 so as to end the present routine tentatively. It should be noted that, when the value of the active execution flag Xactive is set at "1" at the point in time at which the CPU executes the process of step 510, the CPU makes a "No" determination at step 510 to directly proceed to step 595 so as to end the present routine tentatively.

On the other hand, the CPU is configured so as to repeatedly execute a routine shown by a flowchart in FIG. 6 every elapse of a predetermined time. Therefore, at an appropriate point in time, the CPU starts a process from step 600 to proceed to step 610, at which the CPU determines whether the value of the first flag X1get is "0." When the value of the first flag X1get is not "0," the CPU makes a "No" determination at step 610 to directly proceed to step 695 to end the present routine tentatively.

At the present point in time, the value of the first flag X1get is "0." Accordingly, the CPU makes a "Yes" determination at step 610 to proceed to step 620, at which the CPU determines whether a differential pressure acquisition condition is satisfied. The differential pressure acquisition condition, in this example, is satisfied when all of the following conditions are satisfied.

[Condition 1] In an abnormality determination routine (not shown) of the differential pressure sensor 71 which is separately executed, the differential pressure sensor 71 is not determined to be abnormal. In this example, when a state in which the output of the differential pressure sensor 71 is "0" continues for a predetermined time or more, the CPU determines that the differential pressure sensor 71 is abnormal.
[Condition 2] An ambient temperature (the intake air temperature THA) detected by the atmospheric temperature sensor (not shown) is not lower than an extremely low threshold temperature.
[Condition 3] The present point in time is not immediately after an execution of the regeneration control of the DPF 54.

When the differential pressure acquisition condition is not satisfied, the CPU makes a "No" determination at step 620 to directly proceed to step 695 so as to end the present routine tentatively. In contrast, when the differential pressure acquisition condition is satisfied, the CPU makes a "Yes" determination at step 620 to proceed to step 630, at which the CPU determines whether a present DPF-passing-through-gas flow rate Vdpf (which is equal to the exhaust gas flow rate V in this case) is within the first region (low flow-rate range). More specifically, in this case, the CPU determines whether the DPF-passing-through-gas flow rate Vdpf is within the first region based on the exhaust gas flow rate V detected by the exhaust gas flow rate sensor 72. The first region is ranging from a low-side flow rate threshold value V1 L to a high-side flow rate threshold value V1 H (refer to FIG. 2). It should be noted that the low-side flow rate threshold value V1 L is a predetermined value larger than "0," and the high-side flow rate threshold value V1 H is a predetermined value larger than the low-side flow rate threshold value V1 L.

When the DPF-passing-through-gas flow rate Vdpf is not within the first region, the CPU makes a "No" determination at step 630 to directly proceed to step 695 so as to end the present routine tentatively. In contrast, when the DPF-passing-through-gas flow rate Vdpf is within the first region (low flow-rate range), the CPU makes a "Yes" determination at step 630 to proceed to step 640, at which the CPU updates an integrated value Sum-ΔP1 of the differential pressure ΔP (or adds the present differential pressure ΔP to the integrated value Sum-ΔP1). Further, the CPU updates an integrated value SumV1 of the DPF-passing-through-gas flow rate Vdpf (equal to the exhaust gas flow rate V in this case) (or adds the present DPF-passing-through-gas flow rate Vdpf to the integrated value SumV1). Subsequently, the CPU proceeds to step 650 to increase a value of a counter N1 by "1," the value of the counter indicating the number of the data which have been accumulated.

The CPU proceeds to step 660 to determine whether the value of the counter N1 is equal to or larger than a predetermined data number threshold value N1th. When the value of the counter N1 is smaller than the predetermined data number threshold value N1th, the CPU makes a "No" determination at step 660 to directly proceed to step 695 to end the present routine tentatively. Accordingly, the processes of step 640 and step 650 are repeatedly executed, until the number of the data accumulated in each of the integrated value Sum-ΔP1 and the integrated value SumV1 reaches the data number threshold value N1th.

Thereafter, when the value of the counter N1 reaches the predetermined data number threshold value N1th, the CPU makes a "Yes" determination at step 660 to sequentially execute processes from step 670 to step 690 described below, and then proceeds to step 695 to end the present routine tentatively.

Step 670: The CPU obtains, as a differential pressure ΔP1, an average value of the differential pressure ΔP while the DPF-passing-through-gas flow rate Vdpf (equal to the exhaust gas flow rate V in this case) is within the first region (low flow-rate range) by dividing the integrated value Sum-ΔP1 of the differential pressure ΔP by the "data number threshold value N1th which is equal to the value of the counter N1." Further, the CPU obtains, as an exhaust gas flow rate V1, an average value of the DPF-passing-through-gas flow rate Vdpf (equal to the exhaust gas flow rate V in this case) in a period in which the differential pressure (average value) ΔP1 was obtained by dividing the integrated value SumV1 of the DPF-passing-through-gas flow rate Vdpf by the "data number threshold value N1th which is equal to the value of the counter N1."

Step 680: The CPU sets the value of the first flag X1get to "1."

Step 690: The CPU sets the integrated value SumV1, the integrated value Sum-ΔP1, and the value of counter N1 etc. to "0."

In this manner, a single or a plurality (the data number threshold value N1th) of data of "DPF-passing-through-gas flow rate Vdpf and the differential pressure ΔP" are obtained in the period in which the DPF-passing-through-gas flow rate Vdpf is within the first region (low flow-rate range). Each of average values of each of those is obtained as the "data (DPF-passing-through-gas flow rate V1 and the differential pressure ΔP1) in the case in which the DPF-passing-through-gas flow rate Vdpf is within the first region (low flow-rate range)." Note that the data number threshold value N1th may be "1."

When the CPU proceeds to step 520 shown in FIG. 5, the CPU makes a "Yes" determination at step 520 to proceed to step 530, at which the CPU determines whether the value of the second flag X2get is "1." The second flag X2get is set to "0" at the above mentioned initial routine. Therefore, the CPU makes a "No" determination at step 530 to directly proceed to step 595 so as to end the present routine tentatively.

On the other hand, the CPU is configured so as to repeatedly execute a routine shown by a flowchart in FIG. 7 every elapse of a predetermined time. Therefore, at an appropriate point in time, the CPU starts a process from step 700 to proceed to step 710, at which the CPU determines whether the value of the second flag X2get is "0."

At the present point in time, the value of the second flag X2get is "0." Accordingly, the CPU makes a "Yes" determination at step 710 to proceed to step 720 to determine whether the above described differential pressure acquisition condition is satisfied.

When the differential pressure acquisition condition is satisfied, the CPU executes processes after step 730. The processes from step 730 to step 790 are the same as the processes from step 630 to step 690 in FIG. 6 except for the variable to be handled thereof, and thus, a detailed description will be omitted.

It should be noted that the second region is ranging from a low-side flow rate threshold value V2L to a high-side flow rate threshold value V2H (refer to FIG. 2). Further, the low-side flow rate threshold value V2L is larger than the high-side flow rate threshold value V1H of the first region. Furthermore, the high-side flow rate threshold value V2H is larger than the low-side flow rate threshold value V2L.

The variables and the threshold values in the flowchart shown in FIG. 7 are as follows.

Sum-$\Delta$P2: an integrated value of the differential pressure $\Delta$P in a case in which the DPF-passing-through-gas flow rate Vdpf (equal to the exhaust gas flow rate in this case) is within the second region (medium flow-rate range)

SumV2: an integrated value of the DPF-passing-through-gas flow rate Vdpf in the case in which the DPF-passing-through-gas flow rate Vdpf (equal to the exhaust gas flow rate in this case) is within the second region (medium flow-rate range)

N2: the number of data integrated in each of the integrated value Sum-$\Delta$P2 and the integrated value SumV2

N2th: a data number threshold value (it may be the same value as N1th, or may be a value different from N1th)

By the processes of the routine shown in FIG. 7, a single or a plurality (the data number threshold value N2th) of data of "DPF-passing-through-gas flow rate Vdpf and the differential pressure $\Delta$P" are obtained in the period in which the DPF-passing-through-gas flow rate Vdpf is within the second region (medium flow-rate range). Each of average values of each of those is obtained as the "data (DPF-passing-through-gas flow rate V2, and the differential pressure $\Delta$P2) in the case in which the DPF-passing-through-gas flow rate Vdpf is within the second region (medium flow-rate range)." In addition, when those data are obtained, the second flag X2get is set to "1." It should be noted that, the CPU directly proceeds to step 795 to end the present routine tentatively when the CPU makes a "No" determination at any step of step 710, step 720, step 730 and step 760.

After the value of the second flag X2get was set to "1," when the CPU proceeds to step 530 in FIG.5, the CPU makes a "Yes" determination at step 530 so as to proceed to step 540, at which the CPU sets the value of the second flag X2get to "0." As a result of this, the data (DPF-passing-through-gas flow rate V2, differential pressure $\Delta$P2) when the DPF-passing-through-gas flow rate Vdpf is within the second region (medium flow-rate range) start to be newly obtained, according to the routine shown in FIG. 7. Thereafter, the CPU proceeds to step 550 to calculate the differential pressure increase rate S1 according to the following equation.

$$S1 = (\Delta P2 - \Delta P1) / (V2 - V1)$$

Thereafter, the CPU proceeds to step 560 to determine whether the differential pressure increase rate S1 newly obtained at step 550 is larger than the provisional determination value A at that point in time. If the differential pressure increase rate S1 is larger than the provisional determination value A, the CPU makes a "Yes" determination at step 560 to proceed to step 560, at which the CPU sets the differential pressure increase rate S1 as the provisional determination value A. In contrast, if the differential pressure increase rate S1 is equal to or smaller than the provisional determination value A at that point in time, the CPU makes a "No" determination at step 560 to directly proceed to step 595 so as to end the present routine tentatively.

As a result, every time the "data (DPF-passing-through-gas flow rate V2, differential pressure $\Delta$P2) while the DPF-passing-through-gas flow rate Vdpf (the exhaust gas flow rate V) is within the second region (medium flow-rate range)" is newly calculated, and thus, the differential pressure increase rate S1 is newly obtained (calculated), the maximum value (a first differential pressure increase rate) of the differential pressure increase rates S1 obtained up to and/or at that point in time is obtained as the provisional determination value A.

<Provisional abnormality determination>

In the meantime, the CPU is configured so as to repeatedly execute a routine for the provisional abnormality determination shown by a flowchart in FIG. 8 every elapse of a predetermined time. Therefore, at an appropriate point in time, the CPU starts processing from step 800 to proceed to step 810, at which it determines whether the value of the active execution flag Xactive is "0."

At the present point in time, the value of the active execution flag Xactive is "0." Accordingly, the CPU makes a "Yes" determination at step 810 to proceed to step 820, at which it determines whether the ignition key switch 74 has changed from the ON position to the OFF position. The CPU makes a "No" determination at step 820 to directly proceed to step 895 so as to end the present routine tentatively if a negative determination is made at step 820.

In contrast, the CPU makes a "Yes" determination at step 820 to proceed to step 830, at which it determines whether the provisional determination value A is smaller than the provisional determination threshold value Sath, when the point in time at which the CPU executes the process of step 820 is immediately after the "change to the OFF position of the ignition key switch 74."

At this point in time, if the provisional determination value A is equal to or larger than the provisional determination threshold value Sath, the CPU makes a "No" determination at step 830 to directly proceed to step 850, at which it changes the electronic controller 70 to a non-operation state (OFF), and thereafter, the CPU proceeds to step 895 to end the present routine tentatively. Accordingly, the value of the active execution flag Xactive is maintained at "0" since the process of step 840 described later is not executed. In this case, the CPU may store the information indicating that "it was determined that the DPF 54 was normal as a result of the abnormality determination (provisional abnormality determination) of the DPF 54" into the backup RAM.

In contrast, if the provisional determination value A is smaller than the provisional determination threshold value Sath, the DPF 54 may be abnormal. Accordingly, in this case, the CPU makes a "Yes" determination at step 830 to proceed to step 840, at which the CPU sets the value of the active execution flag Xactive "1," and stores the value of the active execution flag Xactive into the backup RAM. Thereafter, the CPU changes the electronic controller 70 to the non-operation state (OFF) at step 850, and proceeds to step 895 so as to end the present routine tentatively.

In this manner, the provisional abnormality determination is executed based on the comparison between the provisional determination value A and the provisional determination threshold value Sath at the shutdown of the engine 10 (at the point in time of the change to the OFF position of the ignition key switch 74), when the value of the the active execution flag Xactive is "0." Further, when the provisional determination value A is smaller than the provisional determination threshold value Sath, the value of the active execution flag Xactive is changed to "1." It should be noted that, if the the value of the active execution flag Xactive is "1" when the CPU executes the process of step 810, the CPU makes a "No" determination at step 810 to directly proceed to step 895 so as to end the present routine tentatively.

<Acquisition of final determination value>

The CPU is configured so as to repeatedly execute a routine shown by a flowchart in FIG. 9 every elapse of a predetermined time. Here, the description will be made on the assumption that the active execution flag Xactive is "1."

At an appropriate point in time, the CPU starts processing from step 900 in FIG. 9 and proceeds to step 910 to determine whether the value of the active execution flag Xactive is "1." If the value of the active execution flag Xactive is not "1," the CPU makes a "No" determination at step 910 to directly proceed to step 995 so as to end the present routine tentatively.

On the other hand, according to the above assumption, the value of the active execution flag Xactive is "1." Accordingly, the CPU makes a "Yes" determination at step 910 to proceed to step 920, at which the CPU determines whether the first flag X1get is "1." If the first flag X1get is not "1," the CPU makes a "No" determination at step 920 to directly proceed to step 995 so as to end the present routine tentatively.

In this case as well, when the value for the first flag X1get is changed to "1" by the execution of the routine in FIG. 6, the CPU makes a "Yes" determination at step 920 to proceed to step 930, at which the CPU determines whether the value of the third flag X3get is "1." The value of the third flag X3get has been set to "0" in the initial routine described above. Accordingly, the CPU makes a "No" determination at step 930 to directly proceed to step 995 so as to end the present routine tentatively.

On the other hand, the CPU is configured so as to repeatedly execute a catalyst temperature control routine shown by a flowchart in FIG. 10 every elapse of a predetermined time. Therefore, at an appropriate point in time, the CPU starts processing from step 1000 to proceed to step 1010, at which the CPU determines whether the value of the active execution flag Xactive is "1." It should be noted that the condition in this step 1010 is one of the conditions which satisfy the "specific condition" described above.

According to the above assumption, the value of the active execution flag Xactive is "1." Accordingly, the CPU makes a "Yes" determination at step 1010 to proceed to step 1020, at which the CPU determines whether an operating state of the engine 10 is a "specific operating state in which the DPF-passing-through-gas flow rate Vdpf (equal to the exhaust gas flow rate V in this case) is within the second region (medium flow-rate range)." More specifically, in this case, the CPU determines whether the DPF-passing-through-gas flow rate Vdpf is between the low-side flow rate threshold value V2L and the high-side flow rate threshold value V2H (V2L < Vdpf < V2H) based on the exhaust gas flow rate V detected by the exhaust gas flow rate sensor 72. It should be noted that the condition in this step 1020 is the other one of the conditions which satisfy the "specific condition" described above.

When the operating state of the engine 10 is the specific operating state described above, the CPU makes a "Yes" determination at step 1020 to proceed to step 1030, at which the CPU determines the fuel adding quantity Qadd to be added to the exhaust pipe 52 by the adding fuel valve 35 in such a manner that the exhaust gas temperature (DOC temperature) T1 becomes equal to a target temperature Ttgt, and operates the adding fuel valve 35 according to the fuel adding quantity Qadd. As a result, the fuel of the fuel adding quantity Qadd is supplied to the DOC 54, so that the temperature of the DOC 54 increases to a temperature around the target temperature Ttgt.

More specifically, the CPU controls the fuel adding quantity Qadd in such a manner that the target temperature Ttgt increases as an elapse of time from the start of step 1030, and reaches a temperature (e.g., 450 degrees centigrade) which makes the DPF-passing-through-gas flow rate Vdpf become finally within the third region (high flow-rate range). Further, the CPU compares a real temperature T1 of the exhaust gas detected by the exhaust gas temperature sensor 73 with the target temperature Ttgt. The CPU increases the fuel adding quantity Qadd by a predetermined amount, if the real temperature T1 is lower than the target temperature Ttgt. The CPU decreases the fuel adding quantity Qadd, if the real temperature T1 is equal to or higher than the target temperature Ttgt. In other words, the CPU performs a feedback control on the fuel adding quantity Qadd with respect to the temperature. Thereafter, the CPU proceeds to step 1095 to end the present routine tentatively.

In contrast, if the operating state of the engine 10 is not the specific operating state described above at the point in time at which the CPU executes the process of step 1020, the CPU makes a "No" determination at step 1020 to proceed to step 1040 so as to set the fuel adding quantity Qadd to "0." In other words, the CPU does not add the fuel. Thereafter, the CPU proceeds to step 1095 to end the present routine tentatively.

It should be noted that, if the value of the active execution flag Xactive is not "1" at the point in time at which the CPU executes the process of step 1010, the CPU makes a "No" determination at step 1010 to proceed to step 1040 so as to set the fuel adding quantity Qadd to "0." Therefore, if the value of the active execution flag Xactive is not "1," the CPU does not execute the fuel addition from the adding fuel valve 35. Thereafter, the CPU proceeds to step 1095 to end the present routine tentatively.

Further, the CPU is configured so as to repeatedly execute a routine shown by a flowchart in FIG. 11 every elapse of a predetermined time. Therefore, at an appropriate point in time, the CPU starts processing from step 1100 to proceed to step 1110, at which the CPU determines whether the value of the third flag X3get is "0."

At the present point in time, the value of the third flag X3get is "0." Therefore, the CPU makes a "Yes" determination at step 1110 to proceed to step 1120, at which the CPU determines whether the differential pressure acquisition condition described above is satisfied.

If the differential pressure acquisition condition is not satisfied, the CPU makes a "No" determination at step 1120 to directly proceed to step 1195 so as to end the present routine tentatively. In contrast, if the differential pressure acquisition condition is satisfied, the CPU makes a "Yes" determination at step 1120 to proceed to step 1130, at which the CPU determines whether the DPF-passing-through-gas flow rate Vdpf is within the third region (high flow-rate range). It should be noted that the third region is a range from the low-side flow rate threshold value V3L to high-side flow rate threshold value V3H (refer to FIG.2). The low-side flow rate threshold value V3L is equal to or higher than the high-side flow rate threshold value V2H of the second region, however, they are equal to each other in the present example. Further, the high-side flow rate threshold value V3H is higher than the low-side flow rate threshold value V3L.

More specifically, at step 1130, the CPU estimates the DPF-passing-through-gas flow rate Vdpf, and determines whether the estimated DPF-passing-through-gas flow rate Vdpf is within the third region (high flow-rate range). In this case, the CPU estimates (obtains) the present DPF-passing-through-gas flow rate Vdpf, by applying "the exhaust gas flow rate V and the exhaust gas temperature T0," both detected by the exhaust gas flow rate sensor 72, and "the exhaust gas temperature T1" detected by the exhaust gas temperature sensor 73 to a "look-up table which defines a relationship among the exhaust gas flow rate V, the exhaust gas temperature T0, the exhaust gas temperature T1, and the DPF-passing-through-gas flow rate Vdpf." This look-up table is determined beforehand by experiments or the like, and is stored in the ROM.

Further, at step 1130, the CPU may determine that the DPF-passing-through-gas flow rate Vdpf is within the third region, when the exhaust gas flow rate V detected by the exhaust gas flow rate sensor 72 at the present point in time is within the second region, and the present fuel adding quantity Qadd is in a predetermined range. In addition, the exhaust gas temperature sensor 73 may include a flow rate sensor which can measure (detect) a gas flow rate. In this case, the CPU may directly detect the present DPF-passing-through-gas flow rate Vdpf based on the output of the exhaust gas temperature sensor 73 at step 1130.

When the CPU makes a "Yes" determination at step 1130, the CPU executes the processes after step 1140. The processes from step 1140 to step 1190 are the same as processes from step 640 to step 690 in FIG. 6 except for the variables to be handled thereof, and thus, a detailed description will be omitted.

The variables and the threshold values in the flowchart shown in FIG. 11 are as follows.

Sum-ΔP3: an integrated value of the differential pressure ΔP in a case in which the DPF-passing-through-gas flow rate Vdpf is within the third region (high flow-rate range)

SumV3: an integrated value of the exhaust gas flow rate V in the case in which the DPF-passing-through-gas flow rate Vdpf is within the third region (high flow-rate range)

N3: the number of data integrated in each of the integrated value Sum-ΔP3 and the integrated value SumV3

N3th: a data number threshold value (it may be the same value as N1th, or may be a value different from N1th)

By the processes of the routine shown in FIG. 11, a single or a plurality (the data number threshold value N3th) of data of "DPF-passing-through-gas flow rate Vdpf and the differential pressure ΔP" are obtained in the period in which the DPF-passing-through-gas flow rate Vdpf is within the third region (high flow-rate range). Each of average values of each of those is obtained as the "data (DPF-passing-through-gas flow rate V3, and the differential pressure ΔP3) in the case in which the DPF-passing-through-gas flow rate Vdpf is within the third region (high flow-rate range)." In addition, when those data are obtained, the third flag X3get is set to "1." It should be noted that, the CPU directly proceeds to step 1195 to end the present routine tentatively when the CPU makes a "No" determination at any step of step 1110, step 1120, step 1130 and step 1160.

After the value of the third flag X3get was set to "1" at step 1180 of FIG. 11, when the CPU proceeds to step 930 in FIG.9, the CPU makes a "Yes" determination at step 930 so as to proceed to step 940, at which the CPU sets the value of the third flag X3get to "0." As a result of this, the data (DPF-passing-through-gas flow rate V3, differential pressure ΔP3) when the DPF-passing-through-gas flow rate Vdpf is within the third region (high flow-rate range) start to be newly obtained, according to the routine shown in FIG. 11. Thereafter, the CPU proceeds to step 950 to calculate the differential pressure increase rate S2 according to the following equation.

$$S2 = (\Delta P3 - \Delta P1) / (V3 - V1)$$

Thereafter, the CPU proceeds to step 960 to determine whether the differential pressure increase rate S2 newly obtained at step 950 is larger than the final determination value B at that point in time. If the differential pressure increase rate S2 is larger than the final determination value B at that point in time, the CPU makes a "Yes" determination at step 960 to proceed to step 970, at which the CPU sets the differential pressure increase rate S2 as the final determination value B. In contrast, if the differential pressure increase rate S2 is equal to or smaller than the final determination value B at that point in time, the CPU makes a "No" determination at step 960 to directly proceed to step 995 so as to end the present routine tentatively.

As a result, every time the "data (DPF-passing-through-gas flow rate V3, differential pressure ΔP3) while the DPF-passing-through-gas flow rate Vdpf is within the third region (high flow-rate range)" is newly calculated, and thus, the differential pressure increase rate S2 is newly obtained (calculated), the maximum value (i.e, the differential pressure correlation value) of a plurality of the differential pressure increase rates S2 obtained up to and/or at that point in time is obtained as the final determination value B.

<Final abnormality determination>

In the meantime, the CPU is configured so as to repeatedly execute a routine for the final abnormality determination shown by a flowchart in FIG. 12 every elapse of a predetermined time. Therefore, at an appropriate point in time, the CPU starts processing from step 1200 to proceed to step 1210, at which the CPU determines whether the value of the active execution flag Xactive is "1."

At this point in time, the active execution flag Xactive is "1." Therefore, the CPU makes a "Yes" determination at step 1210 to proceed to step 1220, at which the CPU determines whether the ignition key switch 74 has changed from the ON position to the OFF position. The CPU directly proceeds from step 1220 to step 1295 to end the present routine tentatively if a negative determination is made at step 1220.

In contrast, the CPU makes a "Yes" determination at step 1220 to proceed to step 1230, at which the CPU determines whether the final determination value B is smaller than the final determination threshold value Sbth, when the point in time at which the CPU executes the process of step 1220 is immediately after the "change to the OFF position of the ignition key switch 74." It should be noted that the final determination threshold value Sbth may be equal to or different from the provisional determination threshold value Sath.

At this point in time, if the final determination value B is equal to or larger than the final determination threshold value Sbth, the CPU makes a "No" determination at step 1230 to directly proceed to step 1250. Accordingly, the value of the abnormality determination flag Xijo is maintained at "0" since the process of step 1240 described later is not executed. In this case, the CPU may store the information indicating that "it was determined that the DPF 54 was normal as a result of the abnormality determination (final abnormality determination) of the DPF 54" into the backup RAM.

In contrast, the DPF 54 is determined to be abnormal if the final determination value B is smaller than the final determination threshold value Sbth. Therefore, in this case, the CPU makes a "Yes" determination at step 1230 to proceed to step 1240, at which the CPU sets the value of the abnormality determination flag Xijo to "1," and stores the value of the abnormality determination flag Xijo into the backup RAM. In addition, at this time, the CPU may turn on an indoor alarm lamp (not shown).

Thereafter, the CPU proceeds to step 1250 to set the value of the active execution flag Xactive to "0," and store the value of the active execution flag Xactive into the back-up RAM. The CPU changes the electronic controller 70 to the non-operating state (OFF) at step 1260, and proceeds to step 1295 to end the present routine tentatively.

It should be noted that, if the value of the active execution flag Xactive is "0" when the CPU executes the process of step 1210, the CPU makes a "No" determination at step 1210 to directly proceed to step 1295 so as to end the present routine tentatively.

In this manner, when the value of the active execution flag is "1," the temperature of the DOC 53 (the catalyst) is increased, and thereby, the temperature and the volume of the exhaust gas are increased. As a result, the frequency that the DPF-passing-through-gas flow rate Vdpf (the flow rate of the exhaust gas passing through the DPF 54) is within the third region (high flow-rate range) is increased. Further, the final abnormality determination is executed at the shutdown of the engine 10 (at the point in time of the change to the OFF position of the ignition key switch 74), based on the comparison between the final determination value B (the maximum value of the differential pressure increase rate S2) and the final determination threshold value Sbth, wherein the final determination value B is calculated using the data (V3, $\Delta$P3) obtained when the DPF-passing-through-gas flow rate Vdpf is within the third region (high flow-rate range). Further, it is determined that the DPF 54 is abnormal if the final determination value B is smaller than the final determination threshold value Sbth.

That is, the first determination apparatus is an abnormality determination apparatus of a particulate filter (DPF 54) disposed in an exhaust passage of an internal combustion engine 10, comprising:

a catalytic device (the DOC 53) disposed in the exhaust gas passage and at a position upstream of the particulate filter;

an unburnt components supply section (the adding fuel valve 35, and the adding fuel delivery pipe 34, etc.) which supplies unburnt components for raising a temperature of the catalytic device to the catalytic device;

a differential pressure acquisition section (differential pressure sensor 71) which acquires a differential pressure of the particulate filter; and

an abnormality determination section, which raises the temperature of the catalytic device by supplying the unburnt components to the catalytic device from the unburnt components supply section (step 345 in FIG. 3, and steps from Step 1010 to step 1030 in FIG. 10) when it is determined that a specific condition (step 1010, and step 1020, in FIG. 10) is satisfied, the specific condition indicating that a determination parameter to be used in executing an abnormality determination of the particulate filter should be acquired; acquires the differential pressure using the differential pressure acquisition section in a temperature raised state where the temperature of the catalytic device is raised (step 350 in FIG. 3, and the routine in FIG. 11), and determines whether an abnormality occurs in the particulate filter (step 355, step 365, and step 370 in FIG. 3, and the routine in FIG. 12) based on a comparison result between a differential pressure correlation value (B) serving as the determination parameter and a predetermined threshold value (Sbth), the differential pressure correlation value being correlated with the acquired differential pressure.

Further, the abnormality determination section is configured to:

acquire, as a first flow rate (V1), a passing-through gas flow rate which is a flow rate of a gas passing thorough the particulate filter, and acquire, as a first differential pressure ($\Delta$P1), the differential pressure using the differential pressure acquisition section, in a non-temperature raised state in which the temperature of the catalytic device is not raised (step 340 in FIG. 3, and the routine in FIG. 6);

acquire, as a second flow rate (V3), the passing-through gas flow rate, and acquire, as a second differential pressure ($\Delta$P3), the differential pressure using the differential pressure acquisition section, in the temperature raised state (step 345 and step 350 in FIG. 3, and the routine in FIG. 11); and

acquire, as a differential pressure correlation value (the final determination value B), a value corresponding to a differential pressure increase rate (($\Delta$P3 - $\Delta$P1) / (V3 - V1)) which is a ratio of a difference between the second differential pressure and the first differential pressure to a difference between the second flow rate and the first flow rate (step 355 in FIG. 3, the routine in FIG. 9).

Further, the abnormality determination section is configured to:

adopt, as a provisional determination value (A), a value (maximum value of ($\Delta$P2 - $\Delta$P1) / (V2 - V1)) correlated with the differential pressure acquired using the differential pressure acquisition section in a non-temperature raised state in which the temperature of the catalytic device is not raised; and

determine that the specific condition is satisfied when it is determined that there is a possibility that an abnormality occurs in the particulate filter based on a comparison result between the provisional determination value (A) and a predetermined provisional determination value (Sath) (step 330 and step 335 in FIG. 3, the routines in FIGs. 5 and 8), and when it is determined that a passing-through gas flow rate, which is a gas flow rate passing through the particulate filter is within a predetermined range (step 305 and step 345 in FIG. 3, and step 1010 and step 1020 in FIG. 10).

Therefore, the first determination apparatus does not consume the unburnt components unnecessarily, and can execute "highly accurate abnormality determination of the particulate filter" with high frequency.

In addition, the first determination apparatus, in the routine of FIG. 9, may replace the first flag X1get with the second flag X2get, and further, adopt a differential pressure increase rate S2 represented by the following equation at step 950.

$$S2 = (\Delta P3 - \Delta P2) / (V3 - V2)$$

That is, the first determination apparatus may obtain, as the differential pressure increase rate S2, the ratio of a "difference between the third differential pressure ΔP3 and the second differential pressure ΔP2" to a "difference between the third passing-through gas flow rate V3 and the second passing-through gas flow rate V2," and obtain the final determination value B based on the rate.

In addition, the first determination apparatus may omit the process of step 1020 in FIG. 10, and directly proceed to step 1030 when the first determination apparatus makes a "Yes" determination at step 1010. That is, the abnormality determination section may determine that the specific condition is satisfied when the abnormality determination section determines that there is a possibility that an abnormality occurs in the particulate filter based on a comparison result between the provisional determination value (A) and the predetermined provisional determination threshold value (Sath), so as to execute the catalyst temperature rising control (step 1030).

<Second embodiment>

Next, an abnormality determination apparatus for a particulate filter (hereinafter, simply referred to as a "second determination apparatus") according to a second embodiment of the present invention will be described. The second determination apparatus is different from the first determination apparatus, only in that one of conditions to constitute the specific condition which indicates that the determination parameters (final determination value B and original data (V3, ΔP3) for the final determination value B) to be used for executing the abnormality determination of the particulate filter should be obtained does not depend on the provisional abnormality determination of the particulate filter. Accordingly, hereinafter, this difference will be described. This specific condition is also a start condition of the catalyst temperature rising control.

In the first determination apparatus, the specific condition is satisfied when the following first and second conditions are both satisfied. That is, "it is determined that there is a possibility that the abnormality has occurred in the DPF 54 in the provisional abnormality determination (first condition), and the DPF-passing-through-gas flow rate Vdpf (equal to the exhaust gas flow rate V in this case) is within the second region (medium flow-rate range) (second condition)."

In contrast, the specific condition in the second determination apparatus is satisfied when all of the following conditions are satisfied.

[Condition 1] An integrated operating time, an integrated revolution number of the engine 10, or a running distance of the vehicle equipped with the engine 10, from an execution time of the previous abnormality determination of the particulate filter, exceeds a predetermined value.
[Condition 2] The DPF-passing-through-gas flow rate Vdpf (equal to the exhaust gas flow rate V in this case) is within the second region (medium flow-rate range).

Therefore, the second determination apparatus can execute only the final abnormality determination without executing the provisional abnormality determination which is executed by the first determination apparatus.

<Third embodiment>

Next, an abnormality determination apparatus for a particulate filter (hereinafter, simply referred to as a "third determination apparatus") according to a third embodiment of the present invention will be described. The third determination apparatus is different from the first determination apparatus, only in that the provisional abnormality determination and/or the final abnormality determination is/are executed using the differential pressure ΔP itself.

The CPU in the third determination apparatus obtains the integrated value Sum-Δ2 by integrating the differential pressure ΔP at step 740 in FIG. 7, and obtains "the differential pressure Δ2 when the DPF-passing-through-gas flow rate Vdpf (equal to the exhaust gas flow rate V in this case) is within the second region (medium flow-rate range)" by dividing the integrated value Sum-ΔP2 of the differential pressure ΔP by the data number threshold value N2th, at step 770.

The CPU omits the process of step 550 in FIG. 5, and obtains, as the provisional determination value A, a maximum value of the differential pressure ΔP2, at step 560 and step 570. In addition, the CPU executes the provisional abnormality determination by determining whether the provisional determination value A (the maximum value of the differential pressure ΔP2) is smaller than the provisional determination threshold value Sath at step 830 in FIG. 8. That is, the CPU determines that there is a possibility that the DPF 54 is abnormal when the provisional determination value A (the maximum value of the differential pressure ΔP2) is smaller than the provisional determination threshold value Sath, sets the value of the active execution flag Xactive to "1" at step 840, and stores the value into the backup RAM.

Similarly, the CPU in the third determination apparatus obtains the integrated value Sum-ΔP2 by integrating the differential pressure ΔP at step 1140 in FIG. 11, and obtains "the differential pressure ΔP3 when the DPF-passing-through-gas flow rate Vdpf is within the third region (high flow-rate range)" by dividing the integrated value Sum-ΔP3 of the differential pressure ΔP by the data number threshold value N3th, at step 1170.

The CPU omits the process of step 950 in FIG. 9, and obtains, as the final determination value B, a maximum value of the differential pressure ΔP3 at step 960 and step 970. In addition, the CPU executes the final abnormality determination by determining whether the final determination value B (the maximum value of the differential pressure ΔP3) is smaller than the final determination threshold value Sbth at step 1230 in FIG. 12. That is, the CPU determines that the DPF 54 is abnormal when the final determination value B (the maximum value of the differential pressure ΔP3) is smaller than the final determination threshold value Sbth, sets the value of the abnormality determination flag Xijo to "1" at step 1240, and stores the value into the backup RAM. Further, the CPU sets the value of the active execution flag Xactive to "0" at step 1250, and stores the value into the backup RAM.

It should be noted that the third determination apparatus may execute the provisional abnormality determination using the differential pressure itself (ΔP1 or ΔP2), and execute the final abnormality determination using the differential pressure increase rate (S2). Alternatively, the third determination apparatus may execute the provisional abnormality determination using the differential pressure increase rate (S1), and execute the final abnormality determination using the differential pressure itself (ΔP3).

The present invention is not limited to the embodiments described above, various modifications may be adopted within the scope of the invention. For example, each of the determination apparatuses may determine that the DPF 54 is abnormal when the final determination value B is smaller than the final determination threshold value Sbth, and the third differential pressure ΔP3 itself is smaller than another determination threshold value Sbth'. Alternatively, each of the determination apparatuses may determine that there is the possibility that the abnormality is occurred in the DPF 54 when the provisional determination value A is smaller than the provisional determination threshold value Sath, and the first differential pressure ΔP1 itself or the second differential pressure ΔP2 itself is smaller than another determination threshold value Sath'. That is, each of the determination apparatuses may execute the provisional abnormality determination and/or the final abnormality determination using both the differential pressure increase rate and the differential pressure.

In addition, each of the determination apparatuses described above includes an adding fuel valve 35 in the exhaust manifold 51, and adds the unburnt components from the adding fuel valve 35 to the exhaust manifold 51. However, each of the determination apparatuses may include the adding fuel valve 35 in the exhaust pipe 52 and at a position downstream of the turbine 55 and upstream of the DOC 53, and adds the unburnt components into the exhaust pipe 52.

Furthermore, each of the determination apparatuses described above, instead of or in addition to the addition of the fuel from the adding fuel valve 35, may perform a fuel injection from the fuel injector 23 at an injection timing which is largely delayed from a main injection timing (i.e., it executes so-called post-injection) so as to discharge the unburnt components from the engine main body 21 of the engine 10 to the exhaust system 50, and thereby, execute the catalyst temperature rising control using the unburnt components.

Each of the determination apparatuses described above may be configured to limit the temperature rising time duration and/or the number of the temperature rising of the catalytic device (the DOC 53) when it executes the final abnormality determination, in order to prevent wasteful consumption of the unburnt components. For example, the CPU may control the supply of the unburnt fuel to catalytic device 53, in such a manner that an integrated value of time period in which the exhaust gas temperature T1 is equal to or higher than a predetermined temperature does not exceed a predetermined value, by monitoring the exhaust gas temperature T1 using the exhaust gas temperature sensor 73. Alternatively, the CPU may control the supply of unburnt fuel to the catalytic device 53, in such a manner that the number of times that the exhaust gas temperature T1 is changed from a temperature equal to or lower than a predetermined temperature to a temperature higher than the predetermined temperature does not exceed a predetermined number.

More specifically, the time required for repeating step 950 in FIG. 9 to calculate the differential pressure correlation value (the differential pressure increase rate S2) predetermined number of times may be set as an upper time limit for the catalyst temperature rising time. Alternatively, a maximum value of the catalyst temperature rising time in a normal running state (i.e., the maximum value of the regeneration time of the DPF 54) may be set as the upper time limit for the catalyst temperature rising time.

Each of the determination apparatuses described above obtains the exhaust gas flow rate V base on the output of the exhaust gas flow rate sensor 72, however, it may obtain the exhaust gas flow rate V by estimating exhaust gas flow rate V based on the operating state of the engine 10 (quantity of fuel injection Qfin, engine rotation speed NE) or the like. In addition, each of the determination apparatuses described above may estimate the exhaust gas flow rate V based on the output of the intake air amount sensor and/or the opening degree of an EGR valve, or the like.

Each of the determination apparatuses described above calculates and updates the maximum value of the differential pressure increase rate S1 (the provisional determination value A) at step 560 and step 570 in FIG. 5, and executes the provisional abnormality determination (at step 830 in FIG. 8) when the ignition key switch 74 has changed to the OFF position, however, it may execute the provisional abnormality determination at every point in time at which step 560 and step 570 are executed, without waiting for the change from the ON position to the OFF position of the ignition key switch 74.

Similarly, each of the determination apparatuses described above calculates and updates the maximum value of differential pressure increase rate S2 (the final determination value B) at step 960 and step 970 in FIG. 9, and executes the final abnormality determination (at step 1230 in FIG. 12) when the ignition key switch 74 has changed to the OFF position, however, it may execute the final abnormality determination at every point in time at which step 960 and step 970 are executed, without waiting for the change from the ON position to the OFF position of the ignition key switch 74.

Furthermore, the provisional determination value A is the maximum value of "the differential pressure increase rate S1 or the differential pressure ∆P2," but may be an inverse of the maximum value, "an average value of a plurality of the differential pressure increase rate S1 or an average value of a plurality of the differential pressure ∆P2," or "an inverse of the average value of a plurality of the differential pressure increase rate S1 or an inverse of the average value of a plurality of the differential pressure ∆P2."

Similarly, the final determination value B is the maximum value of "the differential pressure increase rate S2 or the differential pressure ∆P3," however, it may be an inverse of the maximum value, "an average value of a plurality of the differential pressure increase rate S2 or an average value of a plurality of the differential pressure ∆P3," or "an inverse of the average value of a plurality of the differential pressure increase rate S2 or an inverse of the average value of a plurality of the differential pressure ∆P3."

**Claims**

1. An abnormality determination apparatus for a particulate filter (54) disposed in an exhaust gas passage (52) of an internal combustion engine (20), comprising:

   a catalytic device (53) disposed in said exhaust gas passage (52) and at a position upstream of said particulate filter (54);
   an unburnt components supply section (35) which supplies unburnt components for raising a temperature of said catalytic device (53) to said catalytic device (53); and

   a differential pressure acquisition section (71) which acquires a differential pressure of said particulate filter (54); **characterized by** an abnormality determination section (70), comprising means for raising said temperature of said catalytic device (53) by supplying said unburnt components to said catalytic device (53) from said unburnt components supply section (35) when it is determined that a specific condition is satisfied, said specific condition indicating that a determination parameter to be used in executing an abnormality determination of said particulate filter (54) should be acquired; acquiring said differential pressure using said differential pressure section (71) in a temperature raised state where said temperature of said catalytic device (53) is raised, and determining whether an abnormality occurs in said particulate filter (54) based on a comparison result between a differential pressure correlation value serving as said determination parameter and a predetermined threshold value, said differential pressure correlation value being correlated with said acquired differential pressure.

2. The abnormality determination apparatus of a particulate filter according to claim 1, wherein said abnormality determination section is configured to:

   acquire, as a first flow rate, a passing-through gas flow rate which is a flow rate of a gas passing thorough said particulate filter, and acquire, as a first differential pressure, said differential pressure using said differential pressure acquisition section, in a non-temperature raised state in which said temperature of said catalytic device is not raised;
   acquire, as a second flow rate, said passing-through gas flow rate, and acquire, as a second differential pressure, said differential pressure using said differential pressure acquisition section, in said temperature raised state; and
   acquire, as a differential pressure correlation value, a value corresponding to a differential pressure increase rate which is a ratio of a difference between said second differential pressure and said first differential pressure to a difference between said second flow rate and said first flow rate.

3. The abnormality determination apparatus of a particulate filter according to claim 1, wherein said abnormality determination section is configured to:

   adopt, as a provisional determination value, a value correlated with said differential pressure acquired using said differential pressure acquisition section in a non-temperature raised state in which said temperature of said catalytic device is not raised; and

determine that said specific condition is satisfied when it is determined that there is a possibility that an abnormality occurs in said particulate filter based on a comparison result between said provisional determination value and a predetermined provisional determination threshold value.

**Patentansprüche**

1. Unregelmäßigkeitsbestimmungsapparat für einen in einem Abgasdurchgang (52) eines Verbrennungsmotors (20) angeordneten Partikelfilter (54), der aufweist:

   eine Katalysatorvorrichtung (53), die in dem Abgasdurchgang (52) und an einer Position stromaufwärts des Partikelfilters (54) angeordnet ist, einen Unverbrannte-Komponenten-Versorgungsabschnitt (35), der ungebrannte Komponenten für ein Erhöhen einer Temperatur der Katalysatorvorrichtung (53) an die Katalysatorvorrichtung (53) liefert, und einen Differentialdruckerlangungsabschnitt (71), der einen Differentialdruck des Partikelfilters (54) erlangt, **gekennzeichnet durch** einen Unregelmäßigkeitsbestimmungsabschnitt (70), der Mittel für ein Erhöhen der Temperatur der Katalysatorvorrichtung (53) **durch** ein Liefern der unverbrannten Komponenten von dem Unverbrannte-Komponenten-Versorgungsabschnitt (35) an die Katalysatorvorrichtung (53), wenn es bestimmt wird, dass eine spezifische Bedingung erfüllt wird, wobei die spezifische Bedingung kennzeichnet, dass ein Bestimmungsparameter, der bei einem Ausführen einer Unregelmäßigkeitsbestimmung des Partikelfilters (54) zu verwenden ist, erlangt werden soll, ein Erlangen des Differentialdrucks unter Verwendung des Differentialdruckabschnitts (71) in einem temperaturerhöhten Zustand, in dem die Temperatur der Katalysatorvorrichtung (53) erhöht ist, und ein Bestimmen, ob eine Unregelmäßigkeit in dem Partikelfilter (54) vorkommt, basierend auf einem Vergleichsergebnis zwischen einem Differentialdruckkorrelationswert, der als der Bestimmungsparameter dient, und einem vorgegebenen Schwellenwert, wobei der Differentialdruckkorrelationswert mit dem erlangten Differentialdruck korreliert ist, aufweist.

2. Unregelmäßigkeitsbestimmungsapparat eines Partikelfilters gemäß Anspruch 1, wobei der Unregelmäßigkeitsbestimmungsabschnitt konfiguriert ist, um als eine erste Strömungsrate eine Durchgangsgasströmungsrate, die eine Strömungsrate eines Gases ist, das durch den Partikelfilter hindurchgeht, zu erlangen und als einen ersten Differentialdruck den Differentialdruck unter Verwendung des Differentialdruckerlangungsabschnitts zu erlangen, und zwar in einem nichttemperaturerhöhten Zustand, in dem die Temperatur der Katalysatorvorrichtung nicht erhöht ist, als eine zweite Strömungsrate die Durchgangsgasströmungsrate zu erlangen und als einen zweiten Differentialdruck den Differentialdruck unter Verwendung des Differentialdruckerlangungsabschnitts zu erlangen, und zwar in dem temperaturerhöhten Zustand, und als einen Differentialdruckkorrelationswert einen Wert entsprechend einer Differentialdruckerhöhungsrate, die ein Verhältnis einer Differenz zwischen dem zweiten Differentialdruck und dem ersten Differentialdruck zu einer Differenz zwischen der zweiten Strömungsrate und der ersten Strömungsrate ist, zu erlangen.

3. Unregelmäßigkeitsbestimmungsapparat eines Partikelfilters gemäß Anspruch 1, wobei der Unregelmäßigkeitsbestimmungsabschnitt konfiguriert ist, um als einen vorläufigen Bestimmungswert einen Wert anzunehmen, der mit dem Differentialdruck, der unter Verwendung des Differentialdruckerlangungsabschnitts in einem nichttemperaturerhöhten Zustand erlangt wird, in dem die Temperatur der Katalysatorvorrichtung nicht erhöht ist, korreliert ist, und zu bestimmen, dass die spezifische Bedingung erfüllt ist, wenn es bestimmt wird, dass es eine Möglichkeit gibt, dass eine Unregelmäßigkeit in dem Partikelfilter vorkommt, basierend auf einem Vergleichsergebnis zwischen dem vorläufigen Bestimmungswert und einem vorgegebenen vorläufigen Bestimmungsschwellenwert.

**Revendications**

1. Appareil de détermination d'anomalie pour un filtre à particules (54) disposé dans un passage de gaz d'échappement (52) d'un moteur à combustion interne (20), comprenant :

   un dispositif catalytique (53) disposé dans ledit passage de gaz d'échappement (52) et à une position en amont dudit filtre à particules (54) ; une section d'alimentation en constituants non brûlés (35) qui introduit des constituants non brûlés pour élever une température dudit dispositif catalytique (53) dans ledit dispositif catalytique (53) ; et

une section d'acquisition de pression différentielle (71) qui acquiert une pression différentielle dudit filtre à particules (54) ; **caractérisé par** une section de détermination d'anomalie (70), comprenant un moyen pour élever ladite température dudit dispositif catalytique (53) par introduction desdits constituants non brûlés dans ledit dispositif catalytique (53) à partir de ladite section d'alimentation en constituants non brûlés (35) lorsqu'il est déterminé qu'un état spécifique est satisfait, ladite condition spécifique indiquant qu'un paramètre de détermination à utiliser dans l'exécution d'une détermination d'anomalie dudit filtre à particules (54) doit être acquis ; acquisition de ladite pression différentielle en utilisant ladite section de pression différentielle (71) dans un état élevé en température où ladite température dudit dispositif catalytique (53) est élevée, et détermination si une anomalie apparaît dans ledit filtre à particules (54) sur la base d'un résultat de comparaison entre une valeur de corrélation de pression différentielle servant comme ledit paramètre de détermination et une valeur de seuil prédéterminée, ladite valeur de corrélation de pression différentielle étant corrélée avec ladite pression différentielle acquise.

2. Appareil de détermination d'anomalie d'un filtre à particules selon la revendication 1, dans lequel ladite section de détermination d'anomalie est configurée pour :

   acquérir, comme un premier débit, un débit de gaz de passage qui est un débit d'un gaz passant à travers ledit filtre à particules, et acquérir, comme une pression différentielle, ladite pression différentielle en utilisant ladite section d'acquisition de pression différentielle, dans un état non élevé en température dans lequel ladite température dudit dispositif catalytique n'est pas élevée ;

   acquérir, comme un second débit, ledit débit de gaz de passage, et acquérir, comme une seconde pression différentielle, ladite pression différentielle en utilisant ladite section d'acquisition de pression différentielle, dans ledit état élevé en température ; et

   acquérir, comme une valeur de corrélation de pression différentielle, une valeur correspondant à un taux d'augmentation de pression différentielle qui est un rapport d'une différence entre ladite seconde pression différentielle et ladite première pression différentielle par rapport à une différence entre ledit second débit et ledit premier débit.

3. Appareil de détermination d'anomalie d'un filtre à particules selon la revendication 1, dans lequel ladite section de détermination d'anomalie est configurée pour :

   adopter, comme une valeur de détermination provisoire, une valeur corrélée avec ladite pression différentielle acquise en utilisant ladite section d'acquisition de pression différentielle dans un état non élevé en température dans lequel ladite température dudit dispositif catalytique n'est pas élevée ; et

   déterminer que ladite condition spécifique est satisfaite lorsqu'il est déterminé qu'il y a une possibilité qu'une anomalie apparaisse dans ledit filtre à particules sur la base d'un résultat de comparaison entre ladite valeur de détermination provisoire et une valeur de seuil de détermination provisoire prédéterminée.

10

FIG. 1

FIG. 2

Conceptual flowchart — 300

305
Active execution flag
Xactive = 0 ?

No →

Yes
310
Acquisition of V1, ΔP1
in first region (only once)

315
Acquisition of V2, ΔP2
in second region (repeatedly)

320
Update of maximum value A of
differential pressure increase rate S
(provisional determination value)
every acquisition of V2, ΔP2

325
Ignition ON to OFF ?    No

Yes
330
A < Sath ?    No

Yes

335
Xactive ← 1

340
Acquisition of V3, ΔP3
in third region (repeatedly)

345
Catalyst temperature rising control
in second region (until third region)

350
Acquisition of V3, ΔP3
in third region (repeatedly)

355
Update of maximum value B of
differential pressure increase rate S
(final determination value)
every acquisition of V3, ΔP3

360
Ignition ON to OFF ?    No

Yes
365
B < Sbth ?    No

Yes
370
Determination of
abnormal DPF (memory)

375
Xactive ← 0

Return — 395

FIG. 3

| Initialization routine | ~400 |

| Provisional determination value A ← 0 | ~410 |

| Final determination value B ← 0 | ~420 |

| X1get ← 0 | ~430 |

| X2get ← 0 | ~440 |

| X3get ← 0 | ~450 |

| Initialization of other variables | ~460 |

| Return | ~495 |

FIG. 4

Data acquisition of
provisional
determination value —500

Xactive = 0 ? ⌐510 → No

Yes

X1get = 1 ? ⌐520 → No

Yes

X2get = 1 ? ⌐530 → No

Yes

X2get ← 0 ⌐540

$S1 \leftarrow (\Delta P2 - \Delta P1) / (V2 - V1)$ ⌐550

$S1 > A$ ? ⌐560 → No

Yes

$A \leftarrow S1$ ⌐570

Return —595

FIG. 5

Acquisition of V1, $\triangle$P1 — 600

X1get = 0 ? — 610 → No

Yes

Satisfaction of acquisition condition of differential pressure ? — 620 → No

Yes

V1L < Vdpf < V1H ? (in first region ?) — 630 → No

Yes

Sum-$\triangle$P1 ← Sum-$\triangle$P1 + $\triangle$P
SumV1 ← SumV1 + V — 640

N1 ← N1 + 1 — 650

N1 ≧ N1th ? — 660 → No

Yes

$\triangle$P1 ← Sum-$\triangle$P1 / N1th
V1 ← SumV1 / N1th — 670

X1get ← 1 — 680

Clear SumV1, Sum-$\triangle$P1, N1 — 690

Return — 695

FIG. 6

```
          ┌─────────────────────────────┐
          │   Acquisition of V2, △P2     │──700
          └─────────────┬───────────────┘
                        │            ┌710
          ┌─────────────┴───────────────┐  No
         ◁         X2get = 0 ?           ▷──────┐
          └─────────────┬───────────────┘       │
                      Yes                        │
                        │            ┌720        │
          ┌─────────────┴───────────────┐  No    │
         ◁    Satisfaction of acquisition ▷──────┤
         ◁     condition of differential  ▷      │
         ◁          pressure ?           ▷       │
          └─────────────┬───────────────┘        │
                      Yes                         │
                        │            ┌730         │
          ┌─────────────┴───────────────┐  No     │
         ◁      V2L < Vdpf < V2H ?       ▷────────┤
         ◁        (in second region ?)   ▷        │
          └─────────────┬───────────────┘         │
                      Yes                          │
                        │            ┌740          │
          ┌─────────────┴───────────────┐          │
          │ Sum-△P2 ← Sum-△P2 +△P        │          │
          │ SumV2 ← SumV2 + V            │          │
          └─────────────┬───────────────┘          │
                        │            ┌750           │
          ┌─────────────┴───────────────┐           │
          │         N2 ← N2 + 1          │           │
          └─────────────┬───────────────┘           │
                        │            ┌760            │
          ┌─────────────┴───────────────┐  No        │
         ◁          N2 ≧ N2th ?          ▷───────────┤
          └─────────────┬───────────────┘            │
                      Yes                             │
                        │            ┌770             │
          ┌─────────────┴───────────────┐             │
          │ △P2 ← Sum-△P2 / N2th         │             │
          │ V2 ← SumV2 / N2th            │             │
          └─────────────┬───────────────┘             │
                        │            ┌780              │
          ┌─────────────┴───────────────┐              │
          │         X2get ← 1            │              │
          └─────────────┬───────────────┘              │
                        │            ┌790               │
          ┌─────────────┴───────────────┐               │
          │ Clear SumV2, Sum-△P2, N2     │               │
          └─────────────┬───────────────┘               │
                        │◄──────────────────────────────┘
          ┌─────────────┴───────────────┐
          │          Return             │──795
          └─────────────────────────────┘
```

$$Sum\text{-}\Delta P2 \leftarrow Sum\text{-}\Delta P2 + \Delta P$$
$$SumV2 \leftarrow SumV2 + V$$

$$N2 \leftarrow N2 + 1$$

$$\Delta P2 \leftarrow Sum\text{-}\Delta P2 / N2th$$
$$V2 \leftarrow SumV2 / N2th$$

$$X2get \leftarrow 1$$

FIG. 7

FIG. 8

```
         ╭─────────────────────╮
         │   Data acquisition of │
         │        final          │───── 900
         │  determination value  │
         ╰─────────────────────╯
                    │
                    │            ┌─ 910
            ╱───────────────────╲        No
           ⟨    Xactive = 1 ?     ⟩──────────────────┐
            ╲───────────────────╱                    │
                    │ Yes                             │
                    │            ┌─ 920               │
            ╱───────────────────╲        No           │
           ⟨     X1get = 1 ?      ⟩─────────────────→ │
            ╲───────────────────╱                    │
                    │ Yes                             │
                    │            ┌─ 930               │
            ╱───────────────────╲        No           │
           ⟨     X2get = 1 ?      ⟩─────────────────→ │
            ╲───────────────────╱                    │
                    │ Yes                             │
                    │            ┌─ 940               │
         ┌─────────────────────┐                     │
         │     X3get ← 0        │                     │
         └─────────────────────┘                     │
                    │            ┌─ 950               │
     ┌─────────────────────────────┐                 │
     │ S2 ← (ΔP3-ΔP1) / (V3-V1)     │                 │
     └─────────────────────────────┘                 │
                    │            ┌─ 960               │
            ╱───────────────────╲        No           │
           ⟨      S2 > B ?        ⟩─────────────────→ │
            ╲───────────────────╱                    │
                    │ Yes                             │
                    │            ┌─ 970               │
         ┌─────────────────────┐                     │
         │      B ← S2          │                     │
         └─────────────────────┘                     │
                    │←────────────────────────────────┘
                    │
         ╭─────────────────────╮
         │      Return         │───── 995
         ╰─────────────────────╯
```

$$S2 \leftarrow (\Delta P3 - \Delta P1) / (V3 - V1)$$

FIG. 9

Catalyst temperature
rising control — 1000

Xactive = 1 ? — 1010    No

Yes — 1020

Operating state
corresponding to
second region ?    No

Yes — 1030

Control of Qadd so that T1
becomes equal to
target temperature Ttgt

Qadd ← 0 — 1040

Return — 1095

FIG. 10

Acquisition of V3, $\Delta$P3 ⟶1100

X3get = 0 ? ⟶1110 → No

Yes

Satisfaction of acquisition condition of differential pressure ? ⟶1120 → No

Yes

V3L < Vdpf < V3H ? (in third region ?) ⟶1130 → No

Yes

Sum-$\Delta$P3 ← Sum-$\Delta$P3 + $\Delta$P
SumV3 ← SumV3 + V ⟶1140

N3 ← N3 + 1 ⟶1150

N3 ≧ N3th ? ⟶1160 → No

Yes

$\Delta$P3 ← Sum-$\Delta$P3 / N3th
V3 ← SumV3 / N3th ⟶1170

X3get ← 1 ⟶1180

Clear SumV3, Sum-$\Delta$P3, N3 ⟶1190

Return ⟶1195

FIG. 11

32

Final abnormality
determination — 1200

Xactive = 1 ?  — 1210  No

Yes

Ignition ON to OFF ?  — 1220  No

Yes

B < Sbth ?
(B < Sath ?)  — 1230  No

Yes

Abnormality determination
flag Xijo ← 1
(Turning on alarm lamp)
Store to backup RAM  — 1240

Xactive ← 0
Store to backup RAM  — 1250

Electric controller OFF  — 1260

Return  — 1295

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2011252423 A